Europäisches Patentamt

European Patent Office

Office européen des brevets

(19)

(11) Veröffentlichungsnummer: **0 113 097**
**B1**

(12) **EUROPÄISCHE PATENTSCHRIFT**

(45) Veröffentlichungstag der Patentschrift:
**03.05.89**

(51) Int. Cl.⁴: **B 23 D 77/04**

(21) Anmeldenummer: **83112776.6**

(22) Anmeldetag: **19.12.83**

(54) Nachstellbare Maschinenreibahle.

(30) Priorität: **03.01.83 CH 19/83**

(43) Veröffentlichungstag der Anmeldung:
**11.07.84 Patentblatt 84/28**

(45) Bekanntmachung des Hinweises auf die Patenterteilung:
**03.05.89 Patentblatt 89/18**

(84) Benannte Vertragsstaaten:
**AT BE CH DE FR GB IT LI LU NL SE**

(56) Entgegenhaltungen:
**DE-A- 1 752 151**
**DE-A- 1 942 955**
**DE-A- 2 948 250**
**DE-A- 3 022 984**
**DE-B- 2 210 816**
**DE-B- 2 906 840**

(73) Patentinhaber: **Dihart AG, Industriestrasse 2,
CH-4657 Dulliken (CH)**

(72) Erfinder: **Vig, Istvan, Im Meierhof 7, CH-4600 Olten (CH)**

(74) Vertreter: **Quehl, Horst Max, Dipl.-Ing.,
Seestrasse 640 Postfach 90, CH-8706 Meilen/Zürich
(CH)**

ACTORUM AG

## Beschreibung

Die Erfindung bezieht sich auf eine nachstellbare Maschinenreibahle mit einem Werkzeugschaft und einem nur eine einzige Schneide aufweisenden Reibahlenkopf, einer die Schneide tragenden Wendeschneidplatte sowie Befestigungsmitteln zum Andrücken derselben an eine am Reibahlenkopf vorgesehene Stützfläche, Stellmitteln zur veränderbaren Einstellung des Abstandes der Schneide von der Reibahlenachse und mehreren Führungsleisten am Reibahlenkopf zur Führung der Schneide auf einer Kreisbahn sowie zur Abstützung der auftretenden einseitigen Schneidkräfte.

Maschinenreibahlen dieser Art sind schon seit einiger Zeit bekannt, z.B. aus der DE-A 1 502 869 sowie verschiedenen Prospekten der Fa. Mapal Fabrik für Präzisionswerkzeuge Dr. Kress KG, Aalen, und ferner aus den «Bossard Mitteilungen» Nr. 522, S. 2, vom Oktober 1982 der Fa. Bossard Schrauben AG, Zug. Bei diesen bekannten Maschinenreibahlen der eingangs genannten Art hat die Wendeschneidplatte eine langgestreckte, im wesentlichen rechteckige Form mit der Schneide an der einen und einer Ersatzschneide an der anderen der beiden langen Seiten des Rechtecks und die Befestigungsmittel bestehen im wesentlichen aus einer Spannpratze, die auf die von der besagten Stützfläche abgewandte Plattenseite der Wendeschneidplatte drückt, sowie einer Spannschraube und einer Gewindebohrung im Reibahlenkopf zum Anziehen der Spannpratze. Als Stellmittel zur veränderbaren Einstellung des Abstandes der Schneide von der Reibahlenachse sind bei diesen bekannten Maschinenreibahlen der eingangs genannten Art im Reibahlenkopf in den beiden Endbereichen der die Ersatzschneide tragenden Rechteckseite der Wendeschneidplatte zwei Gewindebohrungen mit eingeschraubten, beim Anziehen entweder direkt über zwischengeschaltete Druckstücke auf die die Ersatzschneide tragende Rechteckseite der Wendeschneidplatte drückenden und dabei die Wendeschneidplatte in radialer Richtung verschiebenden Gewindestiften vorgesehen. Die mit dieser Ausbildung der Stellmittel vorgegebene Art der Einstellung bzw. Nachstellung der Reibahle hat aber für den praktischen Betrieb dieser Reibahlen bzw. genauer gesagt für die Einstellung bzw. Nachstellung derselben am Einsatzort eine ganze Reihe von zum Teil beträchtlichen Nachteilen. Zunächst einmal ist ja ganz offensichtlich, daß eine Einstellung bzw. Nachstellung einer Reibahle, bei der zur Erzielung einer korrekten Lage der Schneide an zwei Orten verstellt werden muß, wesentlich unvorteilhafter ist, als wenn man zur Erzielung des gleichen Ergebnisses nur an einem Ort verstellen müsste. Nun ist es zwar bei den genannten bekannten Reibahlen in gewissen Anwendungsfällen, bei denen es auf die korrekte Lage der Schneide nicht ganz so genau ankommt, jedenfalls bei der Nachstellung der Reibahle möglich, anstelle von beiden Gewindestiften nur den einen zu verstellen, der im Bereich des vorderen Endes

der Wendeschneidplatte und damit in dem Schneidenbereich, wo sich die Hauptschneide befindet, angeordnet ist, aber natürlich ändert sich dann bei jeder Nachstellung die Konizität der Nebenschneide, wobei die Gesamtänderung dieser Konizität von Nachstellung zu Nachstellung größer wird. Die Verstellung an nur einem Ort ist also bei den genannten bekannten Reibahlen nur bei der Nachstellung und dann auch nur unter Inkaufnahme der Veränderung der Schneidengeometrie über dem Stellbereich möglich, während bei der beim Einsetzen einer neuen Wendeschneidplatte und beim Wenden derselben erforderlichen Neueinstellung auf jeden Fall an beiden für die Einstellung vorgesehenen Orten eingestellt werden muß. Diese Einstellung ist bei den genannten bekannten Reibahlen außerdem aus zweierlei Gründen relativ umständlich. Zunächst einmal kann man ja die Spannpratze nicht vollständig fest anziehen, weil bei ganz fest angezogener Spannpratze ja eine Verschiebung der Wendeschneidplatte und damit die Einstellung nicht möglich wäre; andererseits darf die Spannpratze aber auch nicht so schwach angezogen sein, daß sich die Wendeschneidplatte ohne Schwierigkeiten z.B. von Hand verschieben läßt, weil die Wendeschneidplatte ja nach der Einstellung an einem der beiden Einstellorte von der Spannpratze an diesem Einstellort in ihrer Stellung festgehalten werden muß, während die Einstellung an dem anderen Einstellort vorgenommen wird. Es ist daher mit gewissen Schwierigkeiten verbunden, jeweils das richtige Maß des Anziehens der Spannpratze zu finden, zumal ja bei den genannten bekannten Reibahlen die Spannschraube direkt und nicht unter Zwischenschaltung eines Federgliedes auf die Spannpratze wirkt und daher schon ein geringfügiges Zurückdrehen der Spannschraube aus ihrer Stellung bei fest angezogener Spannpratze nahezu zum Abheben der Spannpratze führt. Nun wäre dieses etwas diffizile Anziehen der Spannpratze bzw. der Spannschraube an sich nicht so wesentlich, wenn es beim Einsetzen oder Wenden der Wendeschneidplatte nur jeweils einmal erfolgen müsste, aber das ist nur dann der Fall, wenn man bei der Einstellung an beiden Einstellorten entweder auf Anhieb die richtige Einstellung findet oder sich schrittweise unter Nachmessen des jeweils eingestellten Durchmessers nach jedem Schritt langsam von unten, also von unter dem Sollmaß liegenden Durchmesserwerten her, an die richtige Einstellung herantastet. Und da die auf Anhieb richtige Einstellung – wenn man einmal von sehr erfahrenem Bedienungspersonal absieht – relativ selten sein dürfte, dürfte der Regelfall das langsame schrittweise Herantasten sein, und das ist natürlich relativ umständlich. Dieses Herantasten in relativ kleinen Schritten läßt sich aber nicht vermeiden, weil man im Fall, daß man – sei es wegen zu großer Schritte beim Herantasten oder aufgrund des missglückten Versuches einer auf Anhieb richtigen Einstellung – einen zu großen Durchmesser eingestellt hat, die Spannpratze wieder lösen, zurückstellen und dann die gesamte Einstellung wiederholen muß, denn, wie oben schon erwähnt, muß die Spannpratze ja während der Einstellung soweit angezogen sein, daß sich die Wendeschneidplatte von Hand nicht verschieben läßt; und daher ist nach der Einstellung eines zu großen Durchmessers ein Zurückdrücken der Wendeschneidplatte von Hand nach entsprechender Zurückstellung des betreffenden Gewindestiftes nicht möglich. Natürlich kann man in einem solchen Fall eine Zurückstellung der Wendeschneidplatte durch einen leichten Schlag, z.B. mit einem kleinen Kupferhammer, auf die hinter der Schneide liegende Kante der Wendeschneidplatte erreichen, und wahrscheinlich dürfte das auch so oder ähnlich praktiziert werden, um nach der Einstellung eines zu großen Durchmessers eine nochmalige Wiederholung der gesamten Einstellung vermeiden zu können, aber eine solche Art und Weise der Zurückstellung der Wendeschneidplatte bringt natürlich die Gefahr einer Beschädigung der Schneide bei nicht genau geführtem Schlag mit sich und ist somit im Grunde genommen nur eine wenn irgend möglich zu vermeidende Notlösung, so daß als akzeptable Möglichkeit nur das schon erwähnte umständliche schrittweise Herantasten an die richtige Einstellung verbleibt. Neben seiner Umständlichkeit bringt dieses schrittweise Herantasten auch noch die Gefahr mit sich, daß die Einstellung nicht ganz exakt erfolgt, weil man einerseits bei geringfügig unter dem Sollwert liegendem Durchmesser zur Vermeidung einer Überschreitung des Sollwertes und damit der Einstellung eines zu großen Durchmessers nicht mehr weiter verstellen wird und andererseits einen geringfügig über dem Sollwert liegenden Durchmesser zur Vermeidung der mit einem nochmaligen Einstellen verbundenen Umstände wenn irgend möglich, d.h. solange er nicht außerhalb der Toleranzgrenze liegt, tolerieren wird, so daß also die Gefahr besteht, daß schon bei der Einstellung, die ja an und für sich auf Sollwert erfolgen sollte, ein Teil des Toleranzbereiches ausgeschöpft wird. Die gleiche Gefahr tritt natürlich dann auch bei der Nachstellung auf, denn wenn auch das Herantasten bei der Nachstellung in der Regel wegfällt, weil das Bedienungspersonal zumindest ungefähr weiß, wie groß die Abnützung der Reibahle bzw. die Verringerung des Reibdurchmessers während einer Standzeit bis zur nächsten Nachstellung ist und um welchen Drehwinkel man die Gewindestifte zum Ausgleich dieser Durchmesserverringerung nachstellen muß, so wird man doch zur Vermeidung von Toleranzüberschreitungen im Falle von anfangs nicht ganz exakt eingestellten Sollwerten um einen geringeren Betrag nachstellen, als das bei anfangs exakt eingestellten Sollwerten der Fall wäre, und das führt dann zu einem allmählichen Absinken des Mittelwertes des Reibdurchmessers vor und nach der Nachstellung von der oberen nach der unteren Toleranzgrenze zu. Außerdem ergeben sich mit einem solchen geringeren Nachstellbetrag natürlich auch geringere Standzeiten zwischen jeweils zwei aufeinanderfolgenden Nachstellungen, so daß dann sehr schnell die Frage auftaucht, ob Messungen beim Nachstellen nicht doch vorteilhafter als die Inkaufnahme geringerer Standzeiten zwischen aufeinanderfolgenden Nachstellungen sind, was aber dann wiederum die erwähnten Probleme des Herantastens auch beim Nachstellen mit sich bringen würde. Es zeigt sich also, daß die Ausbildung der Stellmittel bei den genannten bekannten Reibahlen hinsichtlich der Einstellung und Nachstellung eine ganze Reihe von teilweise ineinander eingreifenden und gegenseitig voneinander abhängigen Problemen mit sich bringt, die im wesentlichen alle dadurch verursacht werden, daß eine Verstellung im Prinzip nur in Vorwärtsrichtung, also Richtung einer Durchmesservergrößerung, möglich ist, während eine Rückstellung im eigentlichen Sinne nicht möglich ist sondern nur indirekt durch eine Neueinstellung mit tieferem Anfangswert und Verstellung in Vorwärtsrichtung realisiert werden kann. Nachteilig hinsichtlich der praktischen Handhabung bei der Einstellung und insbesondere auch bei der Nachstellung ist bei den genannten bekannten Reibahlen ferner auch die Anordnung der Stellmittel relativ zu den Befestigungsmitteln oder, genauer gesagt, der in der Größenordnung von 90° liegende Winkel zwischen der Achse der Spannschraube einerseits und den Achsen der beiden Gewindestifte andererseits, denn da die Reibahlen bei dem zuvor erwähnten, ohne Messung erfolgenden Nachstellen im allgemeinen in der Maschine eingespannt bleiben, muß man beim Nachstellen der Reibahle zunächst einmal die Spannschraube etwas lösen, dann den Reibahlenhalter bzw. die Antriebswelle um ca. 90° drehen, dann die Nachstellung an den Gewindestiften vornehmen und dann den Reibahlenhalter wieder um ca. 90° zurückdrehen und die Spannschraube festziehen, so daß der Nachstellvorgang wesentlich umständlicher ist, als wenn die Achsen von Spann- und Stellschrauben parallel oder in einem nur kleinen Winkel zueinander verlaufen würden und somit das umständliche Hin- und Herdrehen des Reibahlenhalters wegfallen würde.

Nun ist sowohl die zu den genannten Einstellproblemen führende Ausbildung der Stellmittel als auch die erwähnte ungünstige Anordnung derselben relativ zu den Befestigungsmitteln zum Teil durch die Gesamtkonzeption der genannten bekannten Reibahlen und insbesondere durch die Ausbildung der Wendeschneidplatte bedingt, die auch in anderer Hinsicht nicht gerade sehr vorteilhaft ist. So hat die Wendeschneidplatte bei den genannten bekannten Reibahlen nur eine Ersatzschneide bzw. insgesamt nur zwei Schneiden, während andererseits von der Zerspanungstechnik her schon seit geraumer Zeit Wendeschneidplatten mit mehr als zwei Schneiden, z.B. in Form von gleichseitigen Vielecken, bekannt sind. Nachteilig ist schließlich bei den genannten bekannten Reibahlen die relativ große Anzahl von Einzelteilen und die konzeptionsbedingte, teilweise recht komplizierte Ausbildung derselben. So bestehen die moderneren Formen der genannten bekannten Reibahlen aus 10 bis 13 Einzelteilen, von denen insbesondere die Reibahlengrundkörper im Bereich des Reibahlenkopfes und die Spannpratzen relativ kompliziert ausgebildet sind.

Der Erfindung lag nun die Aufgabe zugrunde, eine nachstellbare Maschinenreibahle der eingangs genannten Art mit einer neuen, vorteilhafteren Gesamtkonzeption zu schaffen, mit der insbesondere die Einstellprobleme gelöst sind und die zudem aber auch mehr Ersatzschneiden und weniger sowie einfacher ausgebildete Einzelteile als die bekannten Konstruktionen ermöglicht.

Erfindungsgemäß wird das bei einer nachstellbaren Maschinenreibahle der eingangs genannten Art dadurch erreicht, daß die Wendeschneidplatte im wesentlichen die Form eines gleichseitigen Vielecks mit der Schneide an einer der Vieleckseiten und Ersatzschneiden an den übrigen Vieleckseiten aufweist und die Befestigungsmittel einen festen Anschlag für eine erste der die Ersatzschneiden tragenden Vieleckseiten der Wendeschneidplatte, einen verstellbaren Anschlag für eine relativ zu der ersten Vieleckseite geneigte zweite Vieleckseite der die Ersatzschneiden tragenden Vieleckseiten der Wendeschneidplatte und eine Schraubverbindung zum Andrücken der Wendeschneidplatte an die Stützfläche und die beiden Anschläge mit einem sich zumindest auf einem Teil seiner Gesamtlänge nach der von der Stützfläche abgewandten Plattenseite der Wendeschneidplatte zu erweiternden Durchbruch in der Wendeschneidplatte in dem im Schnittpunkt der Winkelhalbierenden der Innenwinkel der Vielecks liegenden Plattenzentrum, einem in den sich erweiternden Teil des Durchbruches passenden, beim Anziehen der Schraubverbindung in diesen sich erweiternden Teil des Durchbruches hineinbewegbaren und bei angezogener Schraubverbindung einseitig an dem sich erweiternden Teil des Durchbruches anliegenden Druckteil, einem mit dem Druckteil und dem die Stützfläche tragenden Teil des Reibahlenkopfes in zugfester Verbindung stehenden, zumindest auf einem Teil seiner Länge mit einem Gewinde versehenen Bolzen und einer den Bolzen mindestens teilweise aufnehmenden Bohrung in dem die Stützfläche tragenden Teil des Reibahlenkopfes umfassen, wobei die Bohrung zum Zwecke des genannten einseitigen Anliegens des Druckteiles an dem sich erweiternden Teil des Durchbruches bei angezogener Schraubverbindung derart gegen den Durchbruch versetzt angeordnet ist, daß der Abstand zwischen der Schneide und dem Durchstoßpunkt der verlängerten Achse der Bohrung durch die Ebene der von der Stützfläche abgewandten Plattenseite der Wendeschneidplatte größer als der Abstand zwischen der Schneide und dem Durchstoßpunkt der verlängerten Achse des Bolzens durch die Ebene der von der Stützfläche abgewandten Plattenseite der Wendeschneidplatte ist und die sich damit ergebende Biegung des Bolzens eine Federkraft erzeugt, die die genannte erste Vieleckseite der Wendeschneidplatte an den festen Anschlag und die genannte zweite Vieleckseite der Wendeschneidplatte zumindest oberhalb der unteren Grenze des Stellbereiches der Reibahle an den verstellbaren Anschlag andrückt und somit auf den verstellbaren Anschlag innerhalb des Stellbereiches der Reibahle eine Rückstellkraft ausübt, und daß die Stellmittel den verstellbaren Anschlag und Mittel zur Verstellung desselben in einer zur Ebene der Stützfläche im wesentlichen parallelen und zu der genannten zweiten Vieleckseite der Wendeschneidplatte geneigten Richtung und der entgegengesetzten Richtung sowie zu einer im wesentlichen druckfesten Abstützung des verstellbaren Anschlages an mindestens einem einstückig mit dem die Stützfläche tragenden Teil des Reibahlenkopfes verbundenen Abstützorgan umfassen, wobei die Verstellbarkeit des verstellbaren Anschlages in der eine Erhöhung des Abstandes der Schneide von der Reibahlenachse bewirkenden Richtung derart begrenzt ist, daß die genannte Biegung des Bolzens an der oberen Grenze des Stellbereiches noch innerhalb des elastischen Biegungsbereiches des Bolzens liegt.

Die vorliegende nachstellbare Maschinenreibahle hat eine ganze Reihe von Vorteilen, von denen der wesentlichste der ist, daß auf den zur Einstellung und Nachstellung der Reibahle dienenden verstellbaren Anschlag durch die erwähnte Federkraft eine Rückstellkraft ausgeübt wird, wodurch bei der Einstellung und Nachstellung der Reibahle eine Verstellung in Vorwärts- und Rückwärtsrichtung ermöglicht wird, und dadurch entfallen praktisch sämtliche eingangs beschriebenen Einstellprobleme. Ein weiterer ganz wesentlicher Vorteil der vorliegenden Reibahle ist, daß die Verstellung der Reibahle mit nur einem Stellglied, also z.B. mit einer einzigen Stellschraube, erfolgt, wodurch sich zusätzliche Zeitersparnisse beim Ein- und Nachstellen ergeben. Weitere Zeitersparnisse beim Nachstellen werden dadurch ermöglicht, daß das bisher im Rahmen des Nachstellvorgangs erforderliche Hin- und Herdrehen des Reibahlenhalters nicht mehr notwendig ist. Insgesamt ergibt sich bei der vorliegenden Reibahle eine ganz wesentliche Vereinfachung und Abkürzung des Einstell- bzw. Nachstellvorganges. Weitere Vorteile der vorliegenden Reibahle sind die Vergrößerung der Anzahl der zur Verfügung stehenden Ersatzschneiden, die Verringerung der Anzahl der Einzelteile, und besonders auch die sehr einfache und damit kostensparende konstruktive Ausbildung der Reibahle, insbesondere im Hinblick auf den Reibahlengrundkörper.

Bei einer bevorzugten Ausbildungsform der vorliegenden Reibahle hat die Wendeschneidplatte im wesentlichen die Form eines gleichseitigen Dreiecks, und die beiden Anschläge liegen an den beiden die Ersatzschneiden tragenden Dreieckseiten der Wendeschneidplatte an. Diese Ausbildungsform hat die zusätzlichen Vorteile, daß sie auch für relativ geringe Reibahlendurchmesser geeignet ist und bei im Material endenden Bohrungen, also sogenannten Sacklöchern, ein Ausreiben der Bohrung bis auf den Bohrungsgrund ermöglicht. Außerdem ermöglicht diese Ausbildungsform eine relativ zentrale Lage der Stellmittel, was bei geringen Reibahlendurchmessern unter Umständen von wesentlicher Bedeutung ist.

Weitere vorteilhafte Ausbildungsformen der vorliegenden Reibahle ergeben sich mit quadratischen, fünfeckigen, sechseckigen und achteckigen Wendeschneidplatten; die zusätzlichen Vorteile liegen hier in erster Linie in der größeren Anzahl von Ersatzschneiden, jedoch sind diese Ausbildungsformen zum Ausreiben von Sacklöchern weniger geeignet sondern kommen hauptsächlich für durchgehende Bohrungen in Frage. Hat die Wendeschneidplatte im wesentlichen die Form eines Quadrates, dann liegt der verstellbare Anschlag an der zur Schneide parallelen Quadratseite der Wendeschneidplatte und der feste Anschlag an einer der beiden zur Schneide rechtwinkligen Quadratseiten der Wendeschneidplatte an. Bei im wesentlichen die Form eines gleichseitigen Fünfecks aufweisender Wendeschneidplatte liegen die beiden Anschläge an den beiden Fünfeckseiten der Wendeschneidplatte an, die an dem der Schneide diagonal gegenüberliegenden Eckpunkt des Fünfecks zusammenlaufen, und bei im wesentlichen die Form eines gleichseitigen Sechs- oder Achtecks aufweisender Wendeschneidplatte liegen die beiden Anschläge an den beiden Sechs- bzw. Achteckseiten der Wendeschneidplatte an, die sich an die beiden Enden der zur Schneide parallelen Sechs- bzw. Achteckseite der Wendeschneidplatte anschliessen.

Vorzugsweise liegen bei der vorliegenden Reibahle sowohl die Schneide als auch die Ersatzschneiden auf der von der Stützfläche abgewandten Plattenseite der Wendeschneidplatte. Das hat den Vorteil, daß, weil drei-, vier-, fünf-, sechs- und acht-eckige Wendeschneidplatten dieser Form marktübliche Artikel sind, ihr Erwerb mit einem entsprechend geringen Kostenaufwand verbunden ist und weil bei ihnen auch beim Zuschliff nur eine relativ geringe Materialmenge abgeschliffen werden braucht, sind auch die Zuschliffkosten relativ gering. Weiterhin ergibt sich hierbei der Vorteil einer einfachen Handhabung beim Schneidenwechsel, da die Wendeschneidplatte dabei nur gedreht, nicht aber umgewendet werden braucht.

Von Vorteil ist ferner eine derartige Ausbildung der Wendeschneidplatte, daß der Durchbruch in der Wendeschneidplatte in seinem sich erweiternden Teil konisch und in dem oder den restlichen Teilen zylindrisch ist und die Achsen der konischen und zylindrischen Teile des Durchbruchs zusammenfallen und durch das genannte Plattenzentrum laufen und die Ebenen der beiden Plattenseiten der Wendeschneidplatte lotrecht durchstoßen. Das ist deswegen von Vorteil, weil die oben erwähnten marktüblichen Wendeschneidplatten mit einem solchen Durchbruch bezogen werden können und daher einen geringeren Kostenaufwand als Wendeschneidplatten mit speziell gestalteten Durchbrüchen verursachen. Das genannte Druckteil sollte in diesem Fall ebenfalls eine konische Form von mindestens annähernd gleicher Konizität wie der des sich erweiternden Teiles des Durchbruches oder eine zu dem konischen Teil des Durchbruches passende ballige Form haben.

Um die Wendeschneidplatte möglichst weit vorn am Reibahlenkopf anordnen zu können, was unter anderem für das schon erwähnte Ausreiben von im Material endenden Bohrungen bis auf den Bohrungsgrund von Bedeutung ist, ist es von Vorteil, wenn die genannte erste Vieleckseite und damit der an dieser anliegende feste Anschlag näher am Kopfende des Reibahlenkopfes liegt als die genannte zweite Vieleckseite und der an dieser anliegende verstellbare Anschlag, weil die Stellmittel in der Regel bedeutend mehr Platz als ein fester Anschlag benötigen.

Eine andere sehr vorteilhafte Ausbildungsform der vorliegenden Reibahle zeichnet sich dadurch aus, daß die Wendeschneidplatte eine im wesentlichen rhombische Form hat und die Schneide sowie die an der zur Schneide parallelen Rhombusspitze der Wendeschneidplatte vorgesehene Ersatzschneide auf der von der Stützfläche abgewandten Plattenseite der Wendeschneidplatte und die beiden anderen Ersatzschneiden der Wendeschneidplatte auf der der Stützfläche zugewandten Plattenseite der Wendeschneidplatte liegen, daß ferner der Durchbruch in der Wendeschneidplatte neben dem genannten, sich nach der von der Stützfläche abgewandten Plattenseite der Wendeschneidplatte zu erweiternden Teil einen weiteren, sich nach der der Stützfläche zugewandten Plattenseite der Wendeschneidplatte zu erweiternden Teil aufweist und daß der verstellbare Anschlag an der zur Schneide parallelen Rhombusseite der Wendeschneidplatte und der feste Anschlag an einer der beiden anderen, Ersatzschneiden tragenden Rhombusseiten der Wendeschneidplatte, vorzugsweise an der dem Kopfende des Reibahlenkopfes näher liegenden Rhombusseite anliegt. Zweckmäßig ist dabei der Durchbruch in der Wendeschneidplatte in seinen beiden sich erweiternden Teilen konisch und die Konizität dieser beiden sich erweiternden Teile gleich und die Achsen dieser beiden sich erweiternden Teile fallen zusammen und laufen durch das genannte Plattenzentrum und durchstoßen die Ebenen der beiden Plattenseiten der Wendeschneidplatte lotrecht, wobei dann das genannte Druckteil eine konische Form von mindestens annähernd gleicher Konizität wie der der beiden sich erweiternden Teile des Durchbruches oder eine zu diesen beiden konischen Teilen des Durchbruches passende ballige Form hat. Der Hauptvorteil dieser Ausbildungsform liegt darin, daß sie bei bis an das Kopfende der Reibahle heranreichender Schneide drei Ersatzschneiden ermöglicht.

Mit besonderem Vorteil können bei der vorliegenden Reibahle das Druckteil und der Bolzen von einer Schraube gebildet sein, an deren Schraubenkopf das Druckteil vorgesehen ist und deren Schraubenschaft den Bolzen bildet, wobei dann die genannte Bohrung eine Gewindebohrung ist, in die die Schraube eingeschraubt ist. Der Vorteil dabei liegt in der Geringhaltung der Anzahl der Einzelteile. Zweckmäßig kann dabei der mit Gewinde versehene Teil des von dem Schraubenschaft gebildeten Bolzens derart bemessen sein, daß sich dieser Gewindeteil der Schraube bei angezogener Schraubverbindung vollständig innerhalb der Gewindebohrung befindet. Der restliche, nicht mit Gewinde versehene Teil des Schraubenschaftes sollte zweckmäßig zumindest auf einem sich an das Gewinde anschließenden Teilstück der Gesamtlänge dieses restlichen Teiles einen Durchmesser haben, der kleiner oder höchstens gleich dem um das Doppelte der Gewindetiefe des Gewindes verminderten Außendurchmessers des Gewindes ist.

Anstelle der Zusammenfassung des Druckteiles und des Bolzens zu einer Schraube und der Ausbildung der Bohrung als Gewindebohrung kann es in bestimmten Fällen, z.B. dann, wenn die für die Bohrung zur Verfügung stehende Länge nur relativ gering ist und daher für die aus Festigkeitsgründen erforderliche Gewindelänge nicht ausreicht, aber auch vorteilhafter sein, Druckteil und Bolzen getrennt zu lassen und die genannte Schraubverbindung so auszubilden, daß der Bolzen in der Bohrung, vorzugsweise durch Preß- oder Kegelsitz, verankert ist und aus derselben herausragt und auf einem Teilstück dieses aus der Bohrung herausragenden Bolzenteiles, dessen Abstand von der Ebene der Stützfläche größer als die Plattendicke der Wendeschneidplatte ist, mit dem Gewinde versehen ist und im Bereich zwischen der Stützfläche und diesem mit dem Gewinde versehenen Teilstück zylindrisch ist und einen Durchmesser hat, der größer oder mindestens gleich dem Außendurchmesser des Gewindes ist, und daß das Druckteil an der der Stützfläche zugewandten Seite einer auf das Gewinde des Bolzens aufschraubbaren Mutter angeordnet ist und innerhalb des Druckteiles eine zylindrische Bohrung von gleichem Durchmesser wie dem des Bolzens im Bereich zwischen Stützfläche und Bolzengewinde vorgesehen ist, deren Bohrungsachse mit der Achse der innerhalb der Mutter vorgesehenen Gewindebohrung zusammenfällt. Ein besonderer Vorteil dieser Ausbildung der Schraubverbindung ist, daß durch den aus der Stützfläche herausragenden, fest angeordneten Bolzen die Handhabung sowohl beim Schneidenwechsel als auch beim Einsetzen einer neuen Wendeschneidplatte vereinfacht wird, denn beim Schneidenwechsel braucht die Wendeschneidplatte nach Lösen der Mutter nur leicht angehoben und um den Bolzen gedreht werden und beim Einsetzen einer neuen Wendeschneidplatte wird diese einfach mit dem Durchbruch auf den Bolzen aufgeschoben und in die richtige Lage gedreht, so daß sowohl beim Schneidenwechsel als auch beim Einsetzen einer neuen Wendeschneidplatte das wegen der versetzt angeordneten Bohrung etwas schwierige Einsetzen einer Schraube wegfällt.

Vorteilhaft können bei der vorliegenden Reibahle die Mittel zur Verstellung und druckfesten Abstützung des verstellbaren Anschlages ein an mindestens einer Führungsfläche abgestütztes und längs der Führungsfläche in einer zur Ebene der Stützfläche parallelen und zu der genannten zweiten Vieleckseite der Wendeschneidplatte geneigten Richtung sowie der entgegengesetzten Richtung verschiebbar angeordnetes, einerseits mit einer den verstellbaren Anschlag bildenden Anschlagfläche an der genannten zweiten Vieleckseite der Wendeschneidplatte und andererseits mit einer Kontaktfläche an einer Stellschraube anliegendes Druckstück und die einerseits an dem Druckstück und andererseits an dem genannten Abstützorgan anliegende Stellschraube sowie eine für die Stellschraube in einem mit der Stützfläche einstückig verbundenen Teil des Reibahlenkopfes vorgesehene Gewindebohrung umfassen, wobei die Stellschraube einen an dem Abstützorgan anliegenden zylindrischen Teil, einen zum dem zylindrischen Teil koaxialen, an der Kontaktfläche des Druckstückes anliegenden konischen Teil und einen ebenfalls zu dem zylindrischen Teil koaxialen, in die für die Stellschraube vorgesehene Gewindebohrung passenden Gewindezapfen umfasst und die Stellschraube sowie die an dem konischen Teil derselben anliegenden Kontaktfläche des Druckstückes derart angeordnet und ausgebildet sind, daß das Druckstück bei Drehung der Stellschraube längs der Führungsfläche verschoben wird.

Zweckmäßig können dabei die Stellschraube und die Wendeschneidplatte das Druckstück auf eine Unterlage drücken, auf der das Druckstück verschiebbar angeordnet ist, wobei vorteilhaft Haltemittel vorgesehen sein können, um das Druckstück bei einem Schneidewechsel der Wendeschneidplatte sowie bei einem Auswechseln derselben auf der Unterlage zu halten, vorzugsweise ein an dem Druckstück angebrachter, in ein Schrägloch in der Unterlage eingreifender federnder Stift. Der Vorteil dieser Ausbildung der Stellmittel ist eine geringe Anzahl von konstruktiv einfach ausgebildeten Einzelteilen.

Zweckmäßig können bei der vorliegenden Reibahle die Schneide und die Ersatzschneiden je eine Hauptschneide im Bereich des vorderen Schneidenendes und eine sich an dieselbe anschließende, bis zum hinteren Schneidenende reichende Nebenschneide umfassen, wobei der Zuschliff der Wendeschneidplatte zur Erzielung eines möglichst geringen Materialabtrags und eines entsprechend geringen Aufwandes für das Schleifen zweckmäßig so sein sollte, daß die Nebenschneiden der Wendeschneidplatte parallel zu den Vieleckseiten derselben verlaufen. Der feste Anschlag sollte ferner die Lage der an denselben angedrückten Wendeschneidplatte zweckmäßig so fixieren, daß der die Nebenschneide bildende Teil der Schneide gegen die Reibahlenachse geneigt ist und der Abstand zwischen Reibahlenachse und Schneide an dem an der Übergangsstelle von Haupt- zu Nebenschneide liegenden vorderen Ende des Nebenschneide bildenden Teils der Schneide größer als an dem am hinteren Schneidenende liegenden hinteren Ende des Nebenschneide bildenden Teiles der Schneide ist. Der Vorteil einer solchen Ausbildung ist, daß die Nebenschneide in jeder Stellung der Stellmittel die richtige Lage und die gleiche Konizität hat und insbesondere Nachstellungen der Reibahle daran nichts ändern.

Die beiden Anschläge und alle anderen mit der Wendeschneidplatte in Berührung stehenden Teile der Reibahle sollten zur Verhinderung von Schneidenbeschädigungen zweckmäßig, vorzugsweise durch Auskehlungen, so ausgebildet sein, daß die Schneide und die Ersatzschneiden nicht mit anderen Teilen der Reibahle in Berührung kommen. Aus dem gleichen Grunde ist es auch von Vorteil, wenn die Wendeschneidplatte im Bereich ihrer Ersatzschneiden rahmenförmig von anderen Teilen der Reibahle umgeben ist und diese anderen Teile die von der Stützfläche abgewandte Plattenseite der Wendeschneidplatte überragen oder zumindest auf gleicher Höhe mit dieser liegen, weil dadurch Beschädigungen der Ersatzschneiden durch Fremdkörper im wesentlichen ausgeschlossen werden.

Der feste Anschlag sollte sich bei der vorliegenden Reibahle zweckmäßig über einen überwiegenden Teil der Gesamtlänge der genannten ersten Vieleckseite der Wendeschneidplatte, vorzugsweise über mehr als 80% der Gesamtlänge derselben, erstrecken. Dadurch ergibt sich erstens eine gute Führung an dem festen Anschlag bei der Einstellung und Nachstellung der Reibahle sowie eine gute Fixierung der Lage der Nebenschneide, und außerdem ist dies auch im Sinne der genannten Verhinderung von Beschädigungen der Ersatzschneiden von Vorteil.

Schließlich sollte bei der vorliegenden Reibahle die Versetzung der Bohrung in dem die Stützfläche tragenden Teil des Reibahlenkopfes gegen den Durchbruch in der Wendeschneidplatte zweckmäßig derart bemessen sein, daß die genannte, durch die Biegung des Bolzens erzeugte Federkraft in der Mitte des Stellbereiches der Reibahle zumindest annähernd auf den Punkt zeigt, an dem sich die genannte erste und die genannte zweite Vieleckseite der Wendeschneidplatte oder Verlängerungen derselben kreuzen. Das hat den Vorteil, daß in der Mitte des Stellbereiches der Reibahle eine im wesentlichen gleichmäßige Aufteilung der Federkraft auf die beiden Anschläge erfolgt. Dies wiederum ist insbesondere dann von Vorteil, wenn der für die Nachstellung der Reibahle vorgesehene Bereich um einiges kleiner als der Stellbereich, also die maximal mögliche Verstellung, ist, weil dann dadurch, daß der für die Nachstellung vorgesehene Bereich in den mittleren Teil des Stellbereiches gelegt wird, über den für die Nachstellung vorgesehenen Bereich eine ungefähr gleichmäßige Aufteilung der Federkraft auf die beiden Anschläge aufrechterhalten bleibt. Aber auch allgemein ist es von Vorteil, wenn der für die Nachstellung der Reibahle vorgesehene Bereich kleiner als der Stellbereich der Reibahle ist und im mittleren Teil dieses Stellbereiches liegt, weil die auf den verstellbaren Anschlag ausgeübte Rückstellkraft nach der unteren Grenze des Stellbereiches oder genauer gesagt der Verstellbarkeit zu stark absinkt und im Grenzbereich nach der oberen Grenze des Stellbereiches bzw. der Verstellbarkeit zu schon die Gefahr von kleineren bleibenden Verformungen des Bolzens besteht.

Anhand der nachstehenden Figuren ist die Erfindung im folgenden an einigen Ausführungsbeispielen näher erläutert. Es zeigen:

Fig. 1 ein Ausführungsbeispiel der genannten bevorzugten Ausbildungsform der vorliegenden Reibahle mit einer im wesentlichen die Form eines gleichseitigen Dreiecks aufweisenden Wendeschneidplatte in Draufsicht,

Fig. 2 einen die Ausbildung der Stellmittel bei der Reibahle in Fig. 1 verdeutlichenden Teilschnitt der Fig. 1 in der Schnittebene I–I,

Fig. 3 einen die Anordnung der Wendeschneidplatte und ihrer Befestigungsschraube sowie der Gewindebohrung für dieselbe bei der Reibahle in Fig. 1 verdeutlichenden Schnitt der Fig. 1 in der Schnittebene II–II,

Fig. 4 einen die Ausbildung des festen Anschlages in Relation zu der Wendeschneidplatte und insbesondere die zum Schneidenschutz vorgesehene Auskehlung und Überhöhung am oberen Anschlagrand bei der Reibahle in Fig. 1 verdeutlichenden Teilschnitt der Fig. 1 in der Schnittebene III–III,

Fig. 5 eine Draufsicht auf die Wendeschneidplatte der Reibahle in Fig. 1 in vergrößertem Maßstab,

Fig. 6 einen die Ausbildung des Durchbruches in der Wendeschneidplatte in Fig. 5 sowie den Zuschliff der Nebenschneide verdeutlichenden Schnitt der Fig. 5 in der Schnittebene IV–IV,

Fig. 7 eine die Ausbildung des die Hauptschneide umfassenden vorderen Teiles der Schneide verdeutlichende Teilansicht der Wendeschneidplatte in Fig. 5 in noch weiter vergrößertem Maßstab,

Fig. 8 ein Schema der Anordnung von Wendeschneidplatte, festem Anschlag, verstellbarem Anschlag und Stellmitteln sowie dafür vorgesehenen Führungsflächen für eine Ausbildungsform der vorliegenden Reibahle mit einer im wesentlichen die Form eines Quadrates aufweisenden Wendeschneidplatte,

Fig. 9 ein Schema der Anordnung von Wendeschneidplatte, festem Anschlag, verstellbarem Anschlag und Stellmitteln sowie dafür vorgesehenen Führungsflächen für eine Ausbildungsform der vorliegenden Reibahle mit einer im wesentlichen die Form eines gleichseitigen Fünfecks aufweisenden Wendeschneidplatte,

Fig. 10 ein Schema der Anordnung von Wendeschneidplatte, festem Anschlag, verstellbarem Anschlag und Stellmitteln sowie dafür vorgesehenen Führungsflächen für eine Ausbildungsform der vorliegenden Reibahle mit einer im wesentlichen die Form eines gleichseitigen Sechsecks aufweisenden Wendeschneidplatte,

Fig. 11 ein Schema der Anordnung von Wendeschneidplatte, festem Anschlag, verstellbarem Anschlag und Stellmitteln sowie dafür vorgesehenen Führungsflächen für eine Ausbildungsform der vorliegenden Reibahle mit einer im wesentlichen die Form eines gleichseitigen Achtecks aufweisenden Wendeschneidplatte,

Fig. 12 ein Schema der Anordnung von Wendeschneidplatte, festem Anschlag, verstellbarem Anschlag und Stellmitteln sowie dafür vorgesehenen Führungsflächen für eine Ausbildungsform der vorliegenden Reibahle mit einer im wesentlichen eine rhombische Form aufweisenden Wendeschneidplatte,

Fig. 13 eine schematische Darstellung der Richtungen und Größenverhältnisse der von der gebogenen Befestigungsschraube der Wendeschneidplatte auf dieselbe sowie auf die Anschläge ausgeübte Kräfte in der Mitte sowie an der unteren oder oberen Grenze des Stellbereichs bei der Reibahle in Fig. 1.

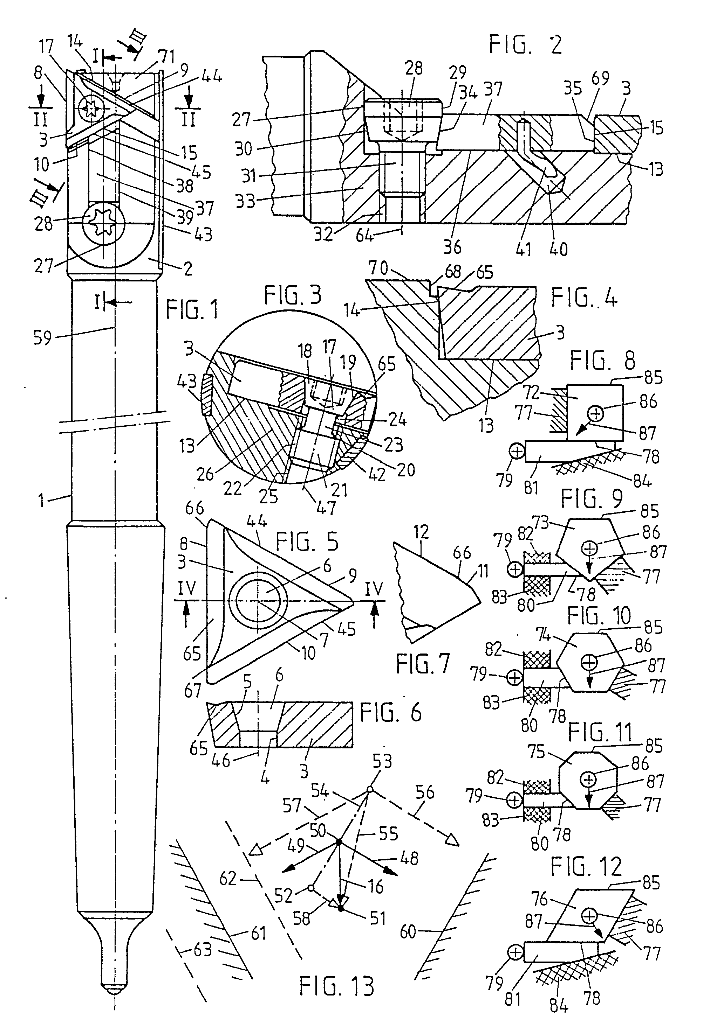

Das in Fig. 1 gezeigte Ausführungsbeispiel der bevorzugten Ausbildungsform der vorliegenden Reibahle besteht aus einem Reibahlenschaft 1 mit einem Reibahlenkopf 2 an seinem vorderen Ende, einer im wesentlichen die Form eines gleichseitigen Dreiecks aufweisenden Wendeschneidplatte 3 mit einem einen zylindrischen Teil 4 und einen sich konisch erweiternden Teil 5 aufweisenden Durchbruch 6 in dem im Schnittpunkt der Winkelhalbierenden der Innenwinkel des gleichseitigen Dreiecks liegenden Plattenzentrum 7 sowie einer Schneide 8 und zwei Ersatzschneiden 9 und 10, die je eine Hauptschneide 11 und eine Nebenschneide 12 aufweisen, einer zum Andrücken der Wendeschneidplatte 3 an die am Reibahlenkopf 2 vorgesehene Stützfläche 13 sowie an den ebenfalls am Reibahlenkopf 2 vorgesehenen festen Anschlag 14 und an den verstellbaren Anschlag 15 und ferner zur Erzeugung einer Federkraft 16 zum Andrücken der Wendeschneidplatte 3 an die beiden Anschläge 14 und 15 vorgesehenen Schraube 17 mit einem am Schraubenkopf 18 vorgesehen konischen Druckteil 19 und einem vom Schraubenschaft 20 gebildeten, auf einem Teil 21 seiner Länge mit einem Gewinde 22 versehen und auf dem restlichen Teil 23 seiner Länge im wesentlichen zylindrischen Bolzen 24, einer für die Schraube 17 vorgesehenen Gewindebohrung 25 in dem die Stützfläche 13 tragenden Teil 26 des Reibahlenkopfes 2, einer zur Verstellung des verstellbaren Anschlages 15 vorgesehenen, an einem einstückig mit dem die Stützfläche 13 tragenden Teil 26 des Reibahlenkopfes 2 verbundenen Abstützorgan 27 abgestützten Stellschraube 28 mit einem an dem Abstützorgan 27 anliegenden zylindrischen Teil 29, einem zur Verstellung dienenden konischen Teil 30 und einem Gewindezapfen 31, einer für die Stellschraube 28 vorgesehenen Gewindebohrung 32 in einem mit der Stützfläche 13 einstückig verbundenen Teil 33 des Reibahlenkopfes 2, einem einerseits mit einer Kontaktfläche 34 an dem konischen Teil 30 der Stellschraube 28 und andererseits mit einer den verstellbaren Anschlag 15 bildenden Anschlagfläche 35 an der Wendeschneidplatte 3 anliegenden, auf einer Unterlage 36 längsverschiebbar angeordneten Druckstück 37, Führungsflächen 38 und 39 an den beiden Längsseiten des Druckstückes 37 zur Führung und Abstützung desselben, einem an dem Druckstück 37 angebrachten, in ein Schrägloch 40 in der Unterlage 36 eingreifenden, das Druckstück 37 beim Schneidenwechsel und beim Auswechseln der Wendeschneidplatte auf der Unterlage 36 haltenden federnden Stift 41 und den zur Führung der Schneide 8 dienenden Führungsleisten 42 und 43.

Die von der Schraube 17 erzeugte, die Wendeschneidplatte 3 mit ihrer die Ersatzschneide 9 tragenden Dreieckseite 44 gegen den festen Anschlag 14 und mit ihrer die Ersatzschneide 10 tragenden Dreieckseite 45 gegen den verstellbaren Anschlag 15 drückende Federkraft 16 entsteht im Prinzip dadurch, daß die Achse 46 des Durchbruches 6 in der Wendeschneidplatte 3 gegen die Achse 47 der für die Schraube 17 in dem die Stützfläche 13 tragenden Teil 26 des Reibahlenkopfes 2 vorgesehenen Gewindebohrung 25 etwas versetzt ist und dadurch beim Anziehen der Schraube 17 der zylindrische Teil 23 derselben etwas elastisch gebogen wird, so daß durch diese Biegung der Schraube 17 die Versetzung des Durchbruches 6 gegen die Gewindebohrung 25 ausgeglichen wird. Infolge dieser Biegung liegt die Schraube 17 mit ihrem am Schraubenkopf 18 vorgesehenen konischen Druckteil 19 nur einseitig an dem sich konisch erweiternden Teil 5 des Durchbruches 6 in der Wendeschneidplatte 3 an und drückt mit der durch die Biegung verursachten Federkraft 16 in Richtung von der Achse 46 des Durchbruches 6 zu der Achse 47 der Gewindebohrung 25 auf den Teil 5 des Durchbruches 6 und damit auf die Wendeschneidplatte 3, die infolgedessen ihrerseits auf die beiden Anschläge 14 und 15 drückt. Die Kraftkomponenten 48 und 49 der Federkraft 16, mit denen die Wendeschneidplatte 3 gegen die beiden Anschläge 14 und 15 gedrückt wird, sollten in der Mitte des Stellbereiches der Reibahle zweckmäßig etwa gleich groß sein. Das ist dann der Fall, wenn eine vom Schnittpunkt der die beiden Ersatzschneiden 9 und 10 tragenden Dreieckseiten 44 und 45 der Wendeschneidplatte 3 ausgehende, zu der Achse 46 des Durchbruches 6 führende Gerade die Achse 47 der Gewindebohrung schneidet. In Fig. 13 ist dies schematisch dargestellt. Der Punkt 50 stellt die Lage der Achse 46 des Durchbruches 6 in der Mitte des Stellbereiches, der Punkt 51 die feste Lage der Achse 47 der Gewindebohrung 25, die Punkte 52 und 53 die Lage der Achse 46 des Durchbruches 6 an der unteren bzw. oberen Grenze des Stellbereiches, die strich-punktierte Linie 54 die Bahn, längs der sich die Achse 46 des Durchbruches 6 bzw. der dargestellte Punkt derselben bei Verstellung von einer zur anderen Grenze des Stellbereiches verschiebt, der Pfeil 16 die durch die Biegung der Schraube 17 verursachte Federkraft 16 in der Mitte des Stellbereiches und die Pfeile 48 und 49 die auf die Anschläge 14 bzw. 15 wirkenden Kraftkomponenten 48 und 49 dieser Federkraft 16, der gestrichelte Pfeil 55 die durch die Biegung der Schraube 17 verursachte Federkraft 55 an der oberen Grenze des Stellbereiches und die gestrichelten Pfeile 56 und 57 die auf die Anschläge 14 bzw. 15 wirkenden Kraftkomponenten dieser Federkraft 55 und schließlich der gestrichelte Pfeil 58 die nur auf den festen Anschlag 14 wirkende und keine auf den verstellbaren Anschlag 15 wirkende Kraftkomponente aufweisende, durch die Biegung der Schraube 17 verursachte Federkraft 58 an der unteren Grenze des Stellbereiches dar. Wie aus den dargestellten Größenverhältnissen in Fig. 13 ersichtlich, ist der Abstand zwischen der Achse 46 des Durchbruches 6 und der Achse 47 der Gewindebohrung 25 und damit auch die Biegung der Schraube 17 und näherungsweise auch die durch diese Biegung verursachte Federkraft an der unteren Grenze des Stellbereiches halb so groß und an der oberen Grenze des Stellbereiches etwa 1,8 mal so groß wie in der Mitte des des Stellbereiches, die auf den festen Anschlag 14 wirkende Kraftkomponente der Federkraft (Pfeile 58, 48 und 56) ist an der unteren Grenze des Stellbereiches halb so groß, in der Mitte des Stellbereiches ebenso groß und an der oberen Grenze des Stellbereiches anderthalb mal so groß wie die durch die Biegung der Schraube 17 verursachte Federkraft 16 in der Mitte des Stellbereiches, und die auf den verstellbaren Anschlag 15 wirkende Kraftkomponente der Federkraft (Pfeile 49 und 57) und damit die auf den verstellbaren Anschlag 15 wirkende Rückstellkraft ist an der unteren Grenze des Stellbereiches Null, in der Mitte des Stellbereiches ebenso groß und an der oberen Grenze des Stellbereiches doppelt so groß wie die durch die Biegung der Schraube 17 verursachte Federkraft 16 in der Mitte des Stellbereiches. Bei Erfüllung der oben gemachten Voraussetzung, daß die Kraftkomponenten 48 und 49 der Federkraft 16 in der Mitte des Stellbereiches der Reibahle gleich groß sind, ergibt sich also der Vorteil, daß die auf den verstellbaren Anschlag 15 wirkende Rückstellkraft über dem Stellbereich von Null an der unteren Grenze des Stellbereiches an mit der Verstellung praktisch linear bis zur oberen Grenze des Stellbereichs ansteigt. Bei der Bemessung des Abstandes zwischen der Achse 46 des Durchbruches 6 und der Achse 47 der Gewindebohrung 25 an der unteren Grenze des Stellbereiches (Abstand der Punkte 51 und 52 in Fig. 13) ist zu beachten, daß der Abstand zwischen den Achsen 46 und 47 an der oberen Grenze des Stellbereiches (Abstand der Punkte 51 und 53 in Fig. 13) etwa das 3,6-fache des Abstandes zwischen den Achsen 46 und 47 an der unteren Grenze des Stellbereiches und die Verstellbarkeit des Abstandes zwischen Schneide 8 und Reibahlenachse 59 von der unteren bis zur oberen Grenze des Stellbereiches das 3-fache des Abstandes zwischen den Achsen 46 und 47 an der unteren Grenze des Stellbereiches beträgt. Wenn also beispielsweise die innerhalb des elastischen Bereiches maximal zulässige Biegung der Schraube 17 bei 100 Mikron liegt und man den Stellbereich bis zu seiner oberen Grenze ausnützen will, dann sollte der Abstand zwischen den Achsen 46 und 47 an der unteren Grenze des Stellbereiches (Abstand der Punkte 51 und 52 in Fig. 13) und damit also die Grundversetzung der Gewindebohrung 25 gegen den Durchbruch 6 zweckmäßig höchstens ein Viertel der maximal zulässigen Biegung, d.h. höchstens 25 Mikron, betragen, wozu allerdings noch der durch das «Wackeln» der Schraube 17 in der Gewindebohrung 25 verursachte, experimentell zu ermittelnde Leerlaufweg hinzukommt, um den sich der Schraubenkopf 18 bzw. das konische Druckteil 19 aus seiner Mittelstellung heraus bis zum Einsetzen einer Biegung der Schraube 17 bewegen kann. Mit einer solchen Grundversetzung von 25 Mikron ergäbe sich nach dem Obengesagten eine Verstellbarkeit der Schneide 8 von 75 Mikron, was jedenfalls für die Nachstellung einer Reibahle bei weitem nicht benötigt wird. Man kann daher den für die Nachstellung benötigten Bereich von z.B. 10 bis 20 Mikron vorteilhaft in den mittleren Teil des Stellbereiches legen und kann außerdem zweckmäßig dafür sorgen, daß die Verstellbarkeit des verstellbaren Anschlages 15 an der oberen Grenze des Nachstellbereiches begrenzt wird und dadurch die Biegung der Schraube 17 wesentlich unter ihrem maximal zulässigen Wert bleibt und außerdem auch für die genannte Grundversetzung der Gewindebohrung 25 gegen den Durchbruch 6 die Toleranzforderungen nicht zu hoch angesetzt werden müssen. Zu der Fig. 13 ist noch darauf hinzuweisen, daß sie in dieser Form nur für das in Fig. 1 dargestellte Ausführungsbeispiel der vorliegenden Reibahle gilt.

Die Wirkungsweise des Stellmechanismus bei der in Fig. 1 gezeigten Reibahle und entsprechend auch bei den in den Fig. 8 bis 12 schematisch dargestellten Ausbildungsformen der vorliegenden Reibahle ist aus der Fig. 2 ersichtlich. Bei Drehung der Stellschraube 28 wird das Druckstück 37 um 2,778 µm × tg α × Ganghöhe/mm pro Grad Drehung verschoben, wenn mit α der Neigungswinkel des konischen Teils 30 der Stellschraube 28 gegen die Achse 64 derselben bezeichnet wird und die Ganghöhe diejenige des auf dem Gewindezapfen 31 der Stellschraube 28 angebrachten Gewindes ist, bei einer Ganghöhe von 1 mm und einem Neigungswinkel α von 10° wie bei der Reibahle in Fig. 1 also um ca. 0,5 µm pro Grad Drehung der Stellschraube 28. Die Verschiebung des Druckstückes 37 erfolgt in der Fig. 2 beim Anziehen der Stellschraube 28 gegen die erwähnte durch die Biegung der Schraube 17 verursachte Rückstellkraft (Pfeile 49 und 57 in Fig. 13) nach rechts zu und beim Lösen der Stellschraube 28 infolge dieser Rückstellkraft nach links zu. Wie aus Fig. 1 ersichtlich, bewirkt die in Richtung der Reibahlenachse 59 erfolgende Verschiebung des Druckstückes 37 eine Verschiebung der Wendeschneidplatte 3 längs des festen Anschlages 14, wobei sich der Abstand zwischen der Schneide 8 und der Reibahlenachse 59 beim Anziehen der Stellschraube 28 erhöht und beim Lösen derselben verringert und die Veränderung dieses Abstandes das 0,866-fache der Verschiebung des Druckstückes 37 beträgt, so daß sich also bei dem obengenannten Beispiel einer Ganghöhe von 1 mm und eines Neigungswinkels α von 10° eine Verstellung der Schneide 8 von 0,424 µm pro Grad Drehung der Stellschraube 28 ergibt. Der von der Anschlagfläche 35 des Druckstückes 37 gebildete verstellbare Anschlag 15 ist über das Druckstück 37 und dessen Kontaktfläche 34 sowie über den konischen Teil 30 und den zylindrischen Teil 29 der Stellschraube 28 an dem von einer Fläche des Grundkörpers der Reibahle gebildeten Abstützorgan 27 abgestützt. Die auf den verstellbaren Anschlag 15 wirkende Rückstellkraft wird zum größten Teil auf das Abstützorgan 27 und nur zu einem geringen Teil über den Gewindezapfen 31 der Stellschraube 28 auf die Gewindebohrung 32 übertragen; das ist deswegen wichtig, weil die Stellschraube 28 sich andernfalls nicht mehr leicht verstellen läßt bzw. die Übertragung eines zu großen Anteils der Rückstellkraft über den Gewindezapfen 31 auf die Gewindebohrung 32 Schwergängigkeit der Stellschraube 28 verursacht. Durch die Führungsflächen 38 und 39 ist das Druckstück 37 gegen eine Querverschiebung gesichert. Infolge der Schräglage der Kontaktfläche 34 und der Anschlagfläche 35 wird das Druckstück 37 bei eingespannter Wendeschneidplatte 3 von der Wendeschneidplatte 3 einerseits und der Stellschraube 28 andererseits gegen die Unterlage 36 gedrückt bzw. auf dieser festgehalten. Damit das Druckstück 37 auch beim Schneidenwechsel und beim Auswechseln der Wendeschneidplatte 3, wenn die von der Wendeschneidplatte 3 auf das Druckstück 37 ausgeübte Rückstellkraft wegfällt, auf der Unterlage 36 festgehalten wird, ist das Druckstück 37 mit dem in das Schrägloch 40 eingreifenden federnden Stift 41 versehen.

Etwas problematisch ist die Verwendung von Wendeschneidplatten in Form eines gleichseitigen Dreiecks wie bei der Reibahle in Fig. 1 die Anordnung der für die Schraube 17 erforderlichen Gewindebohrung, denn wenn man die Wendeschneidplatte in der üblichen Weise so anordnet, daß ein von der Reibahlenachse auf die Schneide gerichteter Radiusverktor in die Ebene der die Schneide tragenden Plattenseite der Wendeschneidplatte fällt, dann wäre für diese Gewindebohrung nicht genügend Platz vorhanden oder genauer gesagt wäre die für diese Gewindebohrung zur Verfügung stehende Länge zu gering, um die bei der Biegung der Schraube 17 auftretenden Belastungen aufnehmen zu können; außerdem würde die Gewindebohrung in diesem Fall auch noch auf die hinter der Schneide angeordnete Führungsleiste (42 in Fig. 3) treffen, wodurch sich die für die Gewindebohrung zur Verfügung stehende Länge noch weiter verringern würde. Die Lösung dieses Problems bei der Reibahle in Fig. 1 zeigt der in Fig. 3 dargestellte Schnitt durch den Reibahlenkopf 2 in der Schnittebene II–II. Wie aus dieser Fig. 3 ersichtlich, ist die Wendeschneidplatte 3 bei der Reibahle in Fig. 1 derart gegen einen von der Reibahlenachse 59 auf die Schneide 8 gerichteten Radiusvektor geneigt angeordnet, daß die Gewindebohrung 25 nicht auf die Führungsleiste 42 trifft sondern an dieser vorbeiläuft und ihre Länge ungefähr doppelt so groß wie die Länge ist, die bei der oben erwähnten üblichen Anordnung der Wendeschneidplatte zur Verfügung stehen würde. Diese geneigte Anordnung der Wendeschneidplatte 3 erfordert allerdings einen besonderen Zuschliff 65 der Schneide 8 und natürlich auch der Ersatzschneiden 9 und 10, durch den die Neigung der Wendeschneidplatte 3 ausgeglichen wird und der aus diesem Grunde die Abtragung einer größeren Materialmenge beim Zuschleifen erfordert, als dies bei der oben erwähnten üblichen Anordnung der Wendeschneidplatte der Fall wäre. Wenn man diesen etwas aufwendigeren Zuschliff vermeiden will, ist es zweckmäßig, die Schraube 17 mit Gewindebohrung 25 durch einen Gewindebolzen mit Mutter zu ersetzen, wobei der Bolzen in einer anstelle der Gewindebohrung 25 tretenden glatten Bohrung durch Preß- oder Kegelsitz verankert ist und aus der Stützfläche 13 herausragt und auf einem Endstück dieses herausragenden Teiles mit Gewinde versehen ist und die auf das Gewinde aufgeschraubte Mutter mit einem konischen Druckteil entsprechend dem Druckteil 19 bei der Schraube 17 versehen ist, denn bei einer solchen Ausbildung kann die Länge der anstelle der Gewindebohrung 25 tretenden glatten Bohrung ohne Schwierigkeiten wesentlich geringer als die für die Gewindebohrung 25 erforderliche Länge gemacht werden, und das wiederum ermöglicht eine Anordnung der Wendeschneidplatte in der oben erwähnten üblichen Weise derart, daß ein von der Reibahlenachse auf die Schneide gerichteter Radiusvektor in die Ebene der die Schneide tragenden Plattenseite der Wendeschneidplatte fällt, womit die Notwendigkeit eines besonderen Zuschliffes zum Ausgleich einer geneigten Anordnung der Wendeschneidplatte entfällt. Die Länge der anstelle der Gewindebohrung 25 tretenden glatten Bohrung kann deswegen wesentlich geringer als die für die Gewindebohrung 25 erforderliche Länge sein, weil erstens bei gleicher Länge und gleichem Außendurchmesser die Biegebelastbarkeit eines in einer glatten Bohrung eingespannten Bolzens wesentlich größer als die eines in eine Gewindebohrung eingeschraubten Gewindezapfens ist und zweitens, wie in Fig. 3 ersichtlich, ein Teil der Gesamtlänge der Gewindebohrung 25 für den für die Biegung der Schraube 17 vorgesehenen zylindrischen Teil 23 derselben benötigt wird. Neben dem Wegfall der Notwendigkeit eines besonderen Zuschliffes hat die Ausbildung mit Gewindebolzen und Mutter anstelle von Schraube 17 und Gewindebohrung 25 noch die oben schon erwähnten Vorteile einer einfacheren Handhabung beim Schneidenwechsel und beim Einsetzen einer neuen Wendeschneidplatte, wobei allerdings in Kauf genommen werden muß, daß die Mutter über die die Schneide tragende Plattenseite der Wendeschneidplatte hinausragt (während das bei der Schraube 17, wie in Fig. 3 ersichtlich, nicht der Fall ist) und daß anstelle von einem Einzelteil, nämlich der Schraube 17, mit dem Gewindebolzen und der Mutter zwei Einzelteile benötigt werden.

Wie die Wendeschneidplatte 3 bei der Reibahle in Fig. 1 im einzelnen ausgebildet ist, zeigen die Fig. 5 bis 7. Im allgemeinen wird für die Wendeschneidplatte 3 eine marktübliche Wendeschneidplatte entsprechender Größe verwendet, die schon mit dem Durchbruch 6 versehen ist und unbearbeitet exakt die Form eines gleichseitigen Dreiecks hat, und diese Wendeschneidplatte wird für ihre Verwendung in einer Reibahle zugeschliffen. Nun haben die Schneiden von Reibahlen in der Regel an ihrem vorderen Ende eine zum Wegschneiden der Rauhigkeiten der auszureibenden Bohrung bestimmte sogenannte Hauptschneide, längs derer sich der Abstand zur Reibahlenachse nach dem hinteren Schneidenende zu vergrößert, und eine sich an das hintere Ende der Haupt-schneide anschließende sogenannte Neben-schneide, längs derer sich der Abstand zur Reibahlenachse nach dem hinteren Schneidenende zu allmählich wieder verkleinert. Der Abstand der Schneide von der Reibahlenachse ist also an der Übergangsstelle von der Hauptschneide zur Nebenschneide am größten und verringert sich somit – da sich die Nebenschneide über den größten Teil der Gesamtlänge der Schneide erstreckt – über nahezu die gesamte Schneidenlänge nach dem hinteren Schneidenende zu. Beim Zuschliff der Schneide einer Reibahle müsste dementsprechend über nahezu die gesamte Schneidenlänge Material von dem unbearbeiteten Schneidenkörper weggeschliffen werden, um die gegen die Reibahlenachse geneigte Nebenschneide aus dem Schneidenkörper herauszuschleifen. Um den damit verbundenen Aufwand bei der vorliegenden Reibahle zu vermeiden, wurde die Neigung der den festen Anschlag 14 bildenden Anschlagleiste gegen die Reibahlenachse so gewählt, daß die für die Schneide 8 vorgesehene Dreieckseite einer mit der für die Ersatzschneide 9 vorgesehenen Dreieckseite 44 an der den festen Anschlag 14 bildenden Anschlagsleiste anliegenden unbear-beiteten Wendeschneidplatte gegen die Reib-ahlenachse schon die für die Nebenschneide 12 erforderliche Neigung hat und daher das vorgenannte Herausschleifen der Nebenschneide aus dem Schneidenkörper entfallen kann. Entsprechendes gilt natürlich auch für die festen Anschläge bei den in den Fig. 8 bis 12 gezeigten Ausbildungsformen der vorliegenden Reibahle. Die Nebenschneiden 12 der Wendeschneidplatte 3 werden also, abgesehen von einem Feinschliff zur Erhöhung der Kantenschärfe sowie dem oben erwähnten Zuschliff 65 zum Ausgleich der geneigten Anordnung der Wendeschneidplatte, im wesentlichen von den Schneidkanten der unbearbeiteten Wendeschneidplatte gebildet und fallen entweder mit diesen zusammen oder verlaufen zumindest parallel zu denselben und damit zu den Dreieckseiten der Wendeschneidplatte, und der zur Herstellung der Wendeschneidplatte 3 aus einer unbearbeiteten Wendeschneidplatte erforderliche Zuschliff erstreckt sich im wesentlichen nur auf den vorderen, die Hauptschneide 11 umfassenden Teil der Schneide 8 und der Ersatzschneiden 9 und 10 sowie den erwähnten, zum Ausgleich der geneigten Anordnung der Wendeschneidplatte erforderlichen Zuschliff 65, während im Bereich von der Übergangsstelle 66 von der Hauptschneide 11 zur Nebenschneide 12 bis zum hinteren Schneidenende 67 (abgesehen von dem genannten, übrigens nicht zwingend erforderlichen Feinschliff zur Erhöhung der Kantenschärfe) auf einen Zuschliff verzichtet werden kann. Wie der vordere Teil der Schneide 8 und der Ersatzschneiden 9 und 10 im einzelnen zugeschliffen wird, zeigt die vergrößerte Darstellung einer Ecke der in Fig. 5 gezeigten Wendeschneidplatte 3 in Fig. 7.

Damit die Schneiden bzw. Ersatzschneiden der Wendeschneidplatte 3 gegen Beschädigungen geschützt sind, ist der feste Anschlag 14, wie in Fig. 4 ersichtlich, an seinem oberen Ende mit der Auskehlung 68 und das Druckstück 37, wie in Fig. 2 ersichtlich, am oberen Ende seiner den verstellbaren Anschlag 15 bildenden Anschlagfläche 35 mit der Abschrägung 69 versehen, und außerdem ist die Wendeschneidplatte 3 gegenüber den sie umgebenden Teilen, also dem den festen Anschlag 14 tragenden Teil 70 am Kopfende 71 des Reibahlenkopfes 2, dem Druckstück 37 und den die Führungsflächen 38 und 39 für das Druckstück 37 tragenden Teilen, versenkt angeordnet, was besonders deutlich an den Fig. 3 und 4 ersichtlich ist.

Zur Begrenzung der Verstellbarkeit des verstellbaren Anschlages 15 bzw. der Stellschraube 28 in der eine Erhöhung des Abstandes der Schneide 8 von der Reibahlenachse 59 bewirkenden Richtung in der Weise, daß die Biegung der Schraube 17 bzw. des zylindrischen Teiles 24 derselben an der oberen Grenze des Stellbereiches der Reibahle noch innerhalb des elastischen Biegungsbereiches der Schraube 17 bzw. des zylindrischen Teiles 24 derselben liegt, wäre noch darauf hinzuweisen, daß diese Begrenzung nicht nur durch dafür vorgesehene Begrenzungsmittel son-dern auch durch entsprechende Betriebsvor-schriften für die Reibahle, z.B. in Form einer Vor-schrift für die maximal zulässige Nachstellung, er-folgen kann. Bei der Reibahle in Fig. 1 sind jedoch Begrenzungsmittel vorgesehen, die darin bestehen, daß die Stellschraube 28 nur soweit angezogen werden kann, bis ihr Gewindezapfen 31 vollständig in die Gewindebohrung 32 eingeschraubt ist. In der in Fig. 2 gezeigten Stellung beispielsweise kann die Stellschraube 28 nur noch um ca. 120° weiter angezogen werden, was einer Nachstellung der Reibahle von ca. 50 µm und einer etwa gleich großen Erhöhung der Biegung der Schraube 17 entsprechen würde. Ein anderes mögliches Begrenzungsmittel wäre z.B. ein Anschlag für die Schraube 28, der z.B. aus einem in die Gewindebohrung 32 in Fig. 2 von unten eingeschraubten kurzen Gewindestift bestehen könnte, der durch einen nach der Justierung erhärtenden Metallkleber verankert wird.

In den Fig. 8 bis 12 ist schematisch dargestellt, wie bei anderen marktüblichen Wendeschneid-platten wie der quadratischen Wendeschneidplat-te 72 in Fig. 8, der die Form eines gleichseitigen Fünfecks aufweisenden Wendeschneidplatte 73 in Fig. 9, der die Form eines gleichseitigen Sechsecks aufweisenden Wendeschneidplatte 74 in Fig. 10, der die Form eines gleichseitigen Achtecks aufweisenden Wendeschneidplatte 75 in Fig. 11 und der rhombischen Wendeschneidplatte 76 in Fig. 12 der feste Anschlag 77 und der verstellbare Anschlag 78 sowie die Stellmittel, also die Stellschraube 79, das Druckstück 80 bzw. 81 und die Führungsflächen 82 und 83 bzw. 84, zweckmäßig auszubilden und in Bezug auf die Schneide 85 anzuordnen sind. Der in Fig. 2 gezeigte Stellmechanismus kann, wie die Fig. 8 bis 12 zeigen, im Prinzip bei allen in den Fig. 8 bis 12 dargestellten Ausbildungsformen der vorliegenden Reibahlen verwendet werden, und zwar bei den in den Fig. 9 bis 11 dargestellten Ausbildungsformen auch mit der gleichen Anordnung der für das Druckstück 37 bzw. 80 vorgesehenen Führungsflächen 38, 39 bzw. 82, 83 und bei den Ausbildungsformen in den Fig. 8 und 12 mit etwas abgeändertem Druckstück 81 und einer anderen Anordnung der Führungsfläche 84. Die von der als Befestigungsmittel der Wendeschneidplatte vorgesehene Schraube 86 infolge ihrer Biegung verursachte Federkraft 87 sollte in der Mitte des Stellbereiches zweckmäßig etwa in die in den Fig. 8 bis 12 dargestellte Richtung zeigen. Es ist ferner darauf hinzuweisen, daß die in den Fig. 8 bis 12 gezeigten Ausbildungsformen für die verschiedenen marktüblichen Wendeschneidplatten in gleicher Weise auf dem Reibahlenkopf 2 angeordnet werden können, wie dies in der Fig. 1 für die Ausbildungsform mit einer die Form eines gleichseitigen Dreiecks aufweisenden Wendeschneidplatte gezeigt ist. Schließlich ist noch darauf hinzuweisen, daß die in den Fig. 8 bis 11 gezeigten Ausbildungsformen in erster Linie für das Ausreiben von durchgehenden Bohrungen geeignet sind, während die in Fig. 12 gezeigte Ausbildungsform zusätzlich auch für das Ausreiben von im Material endenden Bohrungen bis zum Bohrungsgrund geeignet ist. Damit bei dieser Ausbildungsform in Fig. 12 an allen vier Rhombusseiten der Wendeschneidplatte 76 Schneiden vorgesehen werden können, sind an beiden Plattenseiten der Wendeschneidplatte 76 je zwei parallellaufende Schneiden anzuordnen.

Es ist abschließend noch darauf hinzuweisen, daß der Begriff «Reibahlenkopf» im Zusammenhang mit der vorliegenden Erfindung in seiner allgemeinen Bedeutung zu verstehen ist, daß also beispielsweise bei einem Stufenwerkzeug jede einzelne Stufe desselben im Sinne der vorliegenden Erfindung als ein «Kopf» des Werkzeugs anzusehen ist und somit also ein Stufenwerkzeug, bei dem eine oder auch mehrere der Stufen als Reibahlenkopf gemäß der vorliegenden Erfindung ausgebildet sind, neben einem Werkzeug für die Funktionen der übrigen Stufen auch eine nachstellbare Maschinenreibahle nach der vorliegenden Erfindung darstellt. Der Begriff «Reibahlenkopf» im Sinne der vorliegenden Erfindung ist demgemäß so zu verstehen, daß das die Reibfunktion ausübende, als Reibahlenkopf bezeichnete Organ normalerweise im Bereich des vorderen Endes des Werkzeuges bzw. Werkzeugschaftes angeordnet ist, aber ebenso auch an einer anderen Stelle des Werkzeuges bzw. Werkzeugschaftes angeordnet sein kann. Beispielsweise kann der «Reibahlenkopf» bei einer Reibahle, die für das obenerwähnte Ausreiben von durchgehenden Bohrungen vorgesehen ist und bei der der Werkzeugschaft nach Art einer Bohrstange ausgebildet ist, im mittleren Bereich dieses ähnlich einer Bohrstange ausgebildeten Werkzeugschaftes angeordnet sein, ebenso wie der z.B. die zweite oder dritte Stufe eines Stufenwerkzeuges bildende «Reibahlenkopf» gegenüber dem vorderen Ende des Stufenwerkzeuges nach rückwärts versetzt angeordnet ist.

Im Rahmen der vorliegenden Erfindung kann ferner der die Wendeschneidplatte sowie deren Befestigungs- und Stellmittel und die für dieselbe vorgesehene Stützfläche umfassende Teil des Reibahlenkopfes in an sich z.B. von den sogenannten Kurzklemmhaltern her bekannter Weise als von den übrigen Teilen des Reibahlenkopfes bzw. des Werkzeuges lösbarer und damit auswechselbarer Montagesatz ausgebildet sein. Die sich damit ergebenden Vorteile sind die gleichen wie bei den bekannten Kurzklemmhaltern, nämlich einheitlicher Aufbau des Montagesatzes für eine Reihe von unterschiedlichen Reibahlentypen sowie -durchmessern einschließlich Stufenwerkzeugen mit einer oder mehreren die Funktion einer Reibahle aufweisenden Stufen.

## Patentansprüche

1. Nachstellbare Maschinenreibahle mit einem Werkzeugschaft (1), einem nur eine Schneide (8, 85) aufweisenden Reibahlenkopf (2), einer die Schneide (8, 85) tragenden Wendeschneidplatte (3, 72–76), Befestigungsmitteln (17) zum Andrükken derselben an eine am Reibahlenkopf (2) vorgesehene Stützfläche (13), Stellmitteln (15, 28, 36–39, 79–84) zur veränderbaren Einstellung des Abstandes der Schneide (8, 85) von der Reibahlenachse (59) und mit mehreren Führungsleisten (42, 43) am Reibahlenkopf (2) zur Führung der Schneide (8, 85) auf einer Kreisbahn sowie zur Abstützung der auftretenden einseitigen Schneidkräfte, dadurch gekennzeichnet, daß die Wendeschneidplatte (3, 72–76) im wesentlichen die Form eines gleichseitigen Vielecks mit der Schneide (8, 85) an einer der Vieleckseiten und Ersatzschneiden (9, 10) an den übrigen Vieleckseiten aufweist und die Befestigungsmittel einen festen Anschlag (14; 77) für eine erste (44) der die Ersatzschneiden tragenden Vieleckseiten der Wendeschneidplatte, einen verstellbaren Anschlag (15; 78) für eine relativ zu der ersten Vieleckseite geneigte zweite Vieleckseite (45) der die Ersatzschneiden tragenden Vieleckseiten der Wendeschneidplatte und eine Schraubverbindung zum Andrücken der Wendeschneidplatte an die Stützfläche (13) und die beiden Anschläge (14, 15) mit einem sich zumindest auf einem Teil seiner Gesamtlänge nach der von der Stützfläche (13) abgewandten Plattenseite der Wendeschneidplatte (3, 72–76) zu erweiternden Durchbruch (6) in der Wendeschneidplatte (3, 72–76) in dem im Schnittpunkt der Winkelhalbierenden der Innenwinkel des Vielecks liegenden Plattenzentrum (7), einem in den sich erweiternden Teil (5) des Durchbruches passenden, beim Anziehen der Schraubverbindung in diesen sich erweiternden Teil (5) des Durchbruches (6) hineinbewegbaren und bei angezogener Schraubverbindung einseitig an dem sich erweiternden Teil (5) des Durchbruches (6) anliegenden Druckteil (19), einem mit dem Druckteil und dem die Stützfläche (13) tragenden Teil (26) des Reibahlenkopfes (2) in zugfester Verbindung stehenden, zumindest auf einem Teil seiner Länge mit einem Gewinde (22) versehenen Bolzen (24) und einer den Bolzen mindestens teilweise aufnehmenden Bohrung (25) in dem die Stützfläche (13) tragenden Teil (26) des Reibahlenkopfes umfassen, wobei die Bohrung (25) zum Zwecke des genannten einseitigen Anliegens des Druckteiles (19) an dem sich erweiternden Teil des Durchbruches (6) bei angezogener Schraubverbindung derart gegen den Durchbruch (6) versetzt angeordnet ist, daß der Abstand zwischen der Schneide (8, 85) und dem Durchstoßpunkt der verlängerten Achse der Bohrung (25) durch die Ebene der von der Stützfläche (13) abgewandten Plattenseite der Wendeschneidplatte (3, 72–76) größer als der Abstand zwischen der Schneide (8, 85) und dem Durchstoßpunkt der verlängerten Achse des Bolzens (24) durch die Ebene der von der Stützfläche (13) abgewandten Plattenseite der Wendeschneidplatte (3, 72–76) ist und die sich damit ergebende Biegung des Bolzens (24) eine Federkraft (16; 87) erzeugt, die die genannte erste Vieleckseite (44) der Wendeschneidplatte an den festen Anschlag (14) und die genannte zweite Vieleckseite (45) der Wendeschneidplatte (3, 72–76) zumindest oberhalb der unteren Grenze des Stellbereiches der Reibahle an den verstellbaren Anschlag (15) andrückt und somit auf den verstellbaren Anschlag (15) innerhalb des Stellbereiches der Reibahle eine Rückstellkraft ausübt, und daß die Stellmittel den verstellbaren Anschlag (15) und Mittel (28, 36–39; 79–84) zur Verstellung desselben in einer zur Ebene der Stützfläche (13) im wesentlichen parallelen und zu der genannten zweiten Vieleckseite der Wendeschneidplatte (3, 72–76) geneigten Richtung und der entgegengesetzten Richtung sowie zu einer im wesentlichen druckfesten Abstützung des verstellbaren Anschlages an mindestens einem einstückig mit dem die Stützfläche (13) tragenden Teil (26) des Reibahlenkopfes (2) verbundenen Abstützorgan (27) umfassen, wobei die Verstellbarkeit des verstellbaren Anschlages (15) in der eine Erhöhung des Abstandes der Schneide (8) von der Reibahlenachse (59) bewirkenden Richtung derart begrenzt ist, daß die genannte Biegung des Bolzens (24) an der oberen Grenze des Stellbereiches der Reibahle noch innerhalb des elastischen Biegungsbereiches des Bolzens (24) liegt.

2. Reibahle nach Anspruch 1, dadurch gekennzeichnet, daß die Wendeschneidplatte (3) im wesentlichen die Form eines gleichseitigen Dreiecks hat und die beiden Anschläge (14, 15) an den beiden die Ersatzschneiden (9, 10) tragenden Dreieckseiten (44, 45) der Wendeschneidplatte (3) anliegen.

3. Reibahle nach Anspruch 1, dadurch gekennzeichnet, daß die Wendeschneidplatte (72) im wesentlichen die Form eines Quadrates hat und der verstellbare Anschlag (78) an der zur Schneide (85) parallelen Quadratseite der Wechselschneidplatte und der feste Anschlag (77) an einer der beiden zur Schneide (85) rechtwinkligen Quadratseiten der Wendeschneidplatte anliegt.

4. Reibahle nach Anspruch 1, dadurch gekennzeichnet, daß die Wendeschneidplatte (73) im wesentlichen die Form eines gleichseitigen Fünfecks hat und die beiden Anschläge (77, 78) an den beiden Fünfeckseiten der Wendeschneidplatte anliegen, die an dem der Schneide (85) diagonal gegenüberliegenden Eckpunkten des Fünfecks zusammenlaufen.

5. Reibahle nach Anspruch 1, dadurch gekennzeichnet, daß die Wendeschneidplatte (74) im wesentlichen die Form eines gleichseitigen Sechsecks hat und die beiden Anschläge (77, 78) an den beiden Sechseckseiten der Wendeschneidplatte anliegen, die sich an die beiden Enden der zur Schneide (85) parallelen Sechseckseite der Wendeschneidplatte anschließen.

6. Reibahle nach Anspruch 1, dadurch gekennzeichnet, daß die Wendeschneidplatte (75) im wesentlichen die Form eines gleichseitigen Achtecks hat und die beiden Anschläge (77, 78) an den beiden Achteckseiten der Wendeschneidplatte anliegen, die sich an die beiden Enden der zur Schneide (85) parallelen Achteckseite der Wendeschneidplatte anschließen.

7. Reibahle nach einem der Ansprüche 1 bis 6, dadurch gekennzeichnet, daß sowohl die Schneide (8; 85) als auch die Ersatzschneiden (9, 10) auf der von der Stützfläche abgewandten Plattenseite der Wendeschneidplatte liegen.

8. Reibahle nach einem der Ansprüche 1 bis 7, dadurch gekennzeichnet, daß der Durchbruch (6) in der Wendeschneidplatte (3) in seinem sich erweiternden Teil (5) konisch und in dem oder den restlichen Teilen (4) zylindrisch ist und die Achsen (46) der konischen und zylindrischen Teile des Durchbruchs zusammenfallen und durch das genannte Plattenzentrum (7) laufen und die Ebenen der beiden Plattenseiten der Wendeschneidplatte lotrecht durchstoßen und daß das genannte Druckteil (19) eine konische Form von mindestens annähernd gleicher Konizität wie der des sich erweiternden Teiles (5) des Durchbruches (6) oder eine zu dem konischen Teil des Durchbruches passende ballige Form hat.

9. Reibahle nach einem der Ansprüche 1 bis 8, dadurch gekennzeichnet, daß die genannte erste Vieleckseite (44) und damit der an dieser anliegende feste Anschlag (14; 77) näher am Kopfende (71) des Reibahlenkopfes (2) liegt als die genannte zweite Vieleckseite (45) und der an dieser anliegende verstellbare Anschlag (15).

10. Reibahle nach Anspruch 1, dadurch gekennzeichnet, daß die Wendeschneidplatte (76) eine im wesentlichen rhombische Form hat und die Schneide (85) sowie die an der zur Schneide parallelen Rhombusseite der Wendeschneidplatte vorgesehene Ersatzschneide auf der von der Stützfläche abgewandten Plattenseite der Wendeschneidplatte (76) und die beiden anderen Ersatzschneiden der Wendeschneidplatte auf der Stützfläche zugewandten Plattenseite der Wendeschneidplatte (76) liegen, daß ferner der Durchbruch in der Wendeschneidplatte neben dem genannten, sich nach der von der Stützfläche abgewandten Plattenseite der Wendeschneidplatte zu erweiternden Teil einen weiteren, sich nach der der Stützfläche zugewandten Plattenseite der Wendeschneidplatte zu erweiternden Teil aufweist und daß der verstellbare Anschlag (78) an der zur Schneide (85) parallelen Rhombusseite der Wendeschneidplatte (76) und der feste Anschlag (77) an einer der beiden anderen, Ersatzschneiden tragenden Rhombusseiten der Wendeschneidplatte (76), vorzugsweise an der dem Kopfende des Reibahlenkopfes näher liegenden Rhombusseite, anliegt.

11. Reibahle nach Anspruch 10, dadurch gekennzeichnet, daß der Durchbruch in der Wendeschneidplatte (76) in seinen beiden sich erweiternden Teilen konisch ist und die Konizität dieser beiden sich erweiternden Teile gleich ist und die Achsen dieser beiden sich erweiternden Teile zusammenfallen und durch das genannte Plattenzentrum laufen und die Ebenen der beiden Plattenseiten der Wendeschneidplatte (76) lotrecht durchstoßen und daß das genannte Druckteil eine konische Form von mindestens annähernd gleicher Konizität wie der der beiden sich erweiternden Teile des Durchbruches oder eine zu diesen beiden konischen Teilen des Durchbruches passende ballige Form hat.

12. Reibahle nach einem der Ansprüche 1 bis 11, dadurch gekennzeichnet, daß das Druckteil (19) und der Bolzen (24) von einer Schraube (17; 86) gebildet sind, an deren Schraubenkopf (18) das Druckteil vorgesehen ist und deren Schraubenschaft (20) den Bolzen bildet, und daß die Bohrung eine Gewindebohrung (25) ist, in die die Schraube (17) eingeschraubt ist.

13. Reibahle nach Anspruch 12, dadurch gekennzeichnet, daß der mit Gewinde (22) versehene Teil des von dem Schraubenschaft (20) gebildeten Bolzens derart bemessen und so auf dem Schraubenschaft angeordnet ist, daß sich dieser Gewindeteil (21) der Schraube (17) bei angezogener Schraubverbindung vollständig innerhalb der Gewindebohrung (25) befindet.

14. Reibahle nach Anspruch 13, dadurch gekennzeichnet, daß der restliche, nicht mit Gewinde versehene Teil (23) des Schraubenschaftes (20) zumindest auf einem sich an das Gewinde (22) anschließenden Teilstück der Gesamtlänge dieses restlichen Teiles einen Durchmesser hat, der kleiner oder höchstens gleich dem um das Doppelte der Gewindetiefe des Gewindes (22) verminderten Außendurchmesser des Gewindes (22) ist.

15. Reibahle nach einem der Ansprüche 1 bis 11, dadurch gekennzeichnet, daß der Bolzen in der Bohrung, vorzugsweise durch Preß- oder Kegelsitz, verankert ist und aus derselben herausragt und auf einem Teilstück dieses aus der Bohrung herausragenden Bolzenteiles, dessen Abstand von der Ebene der Stützfläche größer als die Plattendicke der Wendeschneidplatte ist, mit dem Gewinde versehen ist und im Bereich zwischen der Stützfläche und diesem mit dem Gewinde versehenen Teilstück zylindrisch ist und einen Durchmesser hat, der größer oder mindestens gleich dem Außendurchmesser des Gewindes ist, und daß das Druckteil an der der Stützfläche zugewandten Seite einer auf das Gewinde des Bolzens aufschraubbaren Mutter angeordnet ist und innerhalb des Druckteiles eine zylindrische Bohrung von gleichem Durchmesser wie dem des Bolzens im Bereich zwischen Stützfläche und Bolzengewinde vorgesehen ist, deren Bohrungsachse mit der Achse der innerhalb der Mutter vorgesehenen Gewindebohrung zusammenfällt.

16. Reibahle nach einem der Ansprüche 1 bis 15, dadurch gekennzeichnet, daß die Mittel zur Verstellung und druckfesten Abstützung des verstellbaren Anschlages (15) ein an mindestens einer Führungsfläche (38, 39; 82, 83, 84) abgestütztes und längs der Führungsfläche in einer zur Ebene der Stützfläche (13) parallelen und zu der genannten zweiten Vieleckseite (45) der Wendeschneidplatte geneigten Richtung sowie der entgegengesetzten Richtung verschiebbar angeordnetes, einerseits mit einer den verstellbaren Anschlag (15; 78) bildenden Anschlagfläche (35) an der genannten zweiten Vieleckseite (45) der Wendeschneidplatte (3; 72, 73, 74, 75, 76) und andererseits mit einer Kontaktfläche (34) an einer Stellschraube (28; 79) anliegendes Druckstück (37; 80, 81) und die einerseits an dem Druckstück und andererseits an dem genannten Abstützorgan (27) anliegende Stellschraube (28; 79) sowie eine für die Stellschraube in einem mit der Stützfläche (13) einstückig verbundenen Teil (33) des Reibahlenkopfes (2) vorgesehene Gewindebohrung (32) umfassen und daß die Stellschraube einen an dem Abstützorgan anliegenden zylindrischen Teil (19), einen zu dem zylindrischen Teil koaxialen, an der Kontaktfläche des Druckstückes anliegenden konischen Teil (30) und einen ebenfalls zu dem zylindrischen Teil koaxialen, in die für die Stellschraube vorgesehene Gewindebohrung passenden Gewindezapfen (31) umfaßt, wobei die Stellschraube (28; 79) und die an dem konischen Teil derselben anliegende Kontaktfläche (34) des Druckstückes (37; 80, 81) derart angeordnet und ausgebildet sind, daß das Druckstück bei Drehung der Stellschraube längs der Führungsfläche verschoben wird.

17. Reibahle nach Anspruch 16, dadurch gekennzeichnet, daß die Stellschraube (28; 79) und die Wendeschneidplatte (3; 72, 73, 74, 75, 76) das Druckstück (37; 80, 81) auf eine Unterlage (36) drücken, auf der das Druckstück verschiebbar angeordnet ist, wobei vorzugsweise Haltemittel (40, 41) vorgesehen sind, um das Druckstück bei einem Schneidenwechsel der Wendeschneidplatte sowie bei einem Auswechseln derselben auf der Unterlage zu halten, vorzugsweise ein an dem Druckstück angebrachter, in ein Schrägloch (40) in der Unterlage (36) eingreifender federnder Stift (41).

18. Reibahle nach einem der Ansprüche 1 bis 17, dadurch gekennzeichnet, daß die Schneide (8; 85) und die Ersatzschneiden je eine Hauptschneide (11) im Bereich des vorderen Schneidenendes und eine sich an dieselbe anschließende, bis zum hinteren Schneidenende reichende Nebenschneide (12) umfassen.

19. Reibahle nach Anspruch 18, dadurch gekennzeichnet, daß die Nebenschneiden der Wendeschneidplatte (3; 72, 73, 74, 75, 76) parallel zu den Vieleckseiten derselben verlaufen und der feste Anschlag (14; 77) die Lage der an denselben angedrückten Wendeschneidplatte so fixiert, daß der Nebenschneide bildende Teil der Schneide (8; 85) gegen die Reibahlenachse (59) geneigt ist und der Abstand zwischen Reibahlenachse und Schneide an dem an der Übergangsstelle (66) von Haupt- zu Nebenschneide liegenden vorderen Ende des Nebenschneide bildenden Teiles der Schneide größer als an dem hinteren Schneidenende (67) liegenden hinteren Ende des Nebenschneide bildenden Teiles der Schneide ist.

20. Reibahle nach einem der Ansprüche 1 bis 19, dadurch gekennzeichnet, daß die beiden Anschläge (14, 15; 77, 78) und alle anderen mit der Wendeschneidplatte (3; 72, 73, 74, 75, 76) in Berührung stehenden Teile der Reibahle, vorzugsweise durch Auskehlungen, so ausgebildet sind, daß die Schneide und die Ersatzschneiden nicht mit anderen Teilen der Reibahle in Berührung kommen.

21. Reibahle nach einem der Ansprüche 1 bis 20, dadurch gekennzeichnet, daß der feste Anschlag (14; 77) sich über einen überwiegenden Teil der Gesamtlänge der genannten ersten Vieleckseite (44) der Wendeschneidplatte (3; 72, 73, 74, 75, 76), vorzugsweise über mehr als 80% der Gesamtlänge derselben, erstreckt.

22. Reibahle nach einem der Ansprüche 1 bis 21, dadurch gekennzeichnet, daß die Versetzung der Bohrung (25) in dem die Stützfläche tragenden Teil (26) des Reibahlenkopfes gegen den Durchbruch (6) in der Wendeschneidplatte (3; 72, 73, 74, 75, 76) derart bemessen ist, daß die genannte, durch die Biegung des Bolzens erzeugte Federkraft (16) in der Mitte des Stellbereiches der Reibahle zumindest annähernd auf den Punkt zeigt, an dem sich die genannte erste (44) und die genannte zweite (45) Vieleckseite der Wendeschneidplatte oder Verlängerungen derselben kreuzen.

23. Reibahle nach einem der Ansprüche 1 bis 22, dadurch gekennzeichnet, daß der für die Nachstellung der Reibahle vorgesehene Bereich kleiner als der Stellbereich der Reibahle ist und im mittleren Teil dieses Stellbereiches liegt.

## Claims

1. An adjustable machine reamer comprising a tool shank (1) and a reamer head (2) with a single cutting edge (8, 85), a turnable cutting plate (3, 72–76) carrying the cutting edge (8, 85) and fastening means (17) for pressing said turnable cutting plate against a supporting surface (13) provided on the reamer head (2), adjusting means (15, 28, 36–39, 79–84) for varying the setting of the distance between the cutting edge (8, 85) and the axis (59) of the reamer and several guides (42, 43) on the reamer head (2) for guiding the cutting edge (8, 85) in a circular orbit as well as for supporting the unilateral cutting forces, characterized in that the turnable cutting plate (3; 72–76) has essentially the form of an equilateral polygon with the cutting edge (8; 85) on one side of the polygon and spare cutting edges (9, 10) on the remaining sides of the polygon, the fastening means comprising a fixed stop (14; 17) for a first (44) one of the polygon-sides of the turnable cutting plate carrying the spare cutting edges, an adjustable stop (15; 78) for a second (45) one of the polygon-sides at the turnable cutting plate carrying the spare cutting edges, said second side being inclined relative to said first side, and a screw connection for pressing the turnable cutting plate against the supporting surface (13) and the two stops (14, 15) comprising an opening (6) in the turnable cutting plate widening over at least a part of its total length towards the plate-side of the turnable cutting plate facing away from the supporting surface (13) of the turnable cutting plate (3, 72–76), said opening lying in the center (7) of the turnable cutting plate (3, 72–76), at the intersection of the bisecting lines of the internal angles of the polygon, a pressure part (19) fitting into the widening part (5) of the opening (6) and being movable into said widening part (5) of the opening during tightening of said screw connection and resting unilaterally against the widening part of said opening (6) with the screw connection tightened, a pin (24) being connected with the pressure part and the part (26) of the reamer head (2) carrying the supporting surface and being provided over at least a part of its length with a thread (22), and a borehole (25) at least partly accommodating the pin and being in the part (26) of the reamer head carrying the supporting surface (13), said borehole (25) being, for the purpose of said unilateral resting of the pressure part against the widening part of the opening (6) with the screw connection tightened, arranged offset to the opening (6) in such a manner that the distance between the cutting edge (8, 85) and the point of intersection of the extended axis of the borehole with the plane of the plate-side of the turnable cutting plate (3, 72–76) facing away from the supporting surface (13) is greater than the distance between the cutting edge (8, 85) and the point of intersection of the extended axis of the pin (24) with the plane of the plate-side of the turnable cutting plate (3, 72–76) facing away from the supporting surface (13) and that the deflection of the pin (24), resulting therefrom generates a springy force (16; 87) pressing said first (44) polygon-side of the turnable cutting plate (3, 72–76) against the fixed stop (14) and said second polygon-side (45) of the turnable cutting plate (3, 72–76) against the adjustable stop (15) at least above the lower limit of the setting range of the reamer, thus exerting a restoring force on the adjustable stop within the setting range of the reamer, and that the adjusting means comprise the adjustable stop (15) and means (28, 36–39; 79–84) for adjustment thereof in a direction essentially parallel to the plane of the supporting surface (13) and inclined towards said second polygon-side of the turnable cutting plate (3, 72–76) and in the opposite direction as well as for the essentially compression-proof support of the adjustable stop at at least one support element (27) connected in one piece with the part (26) of the reamer head (2) carrying the supporting surface (13), adjustability of the adjustable stop (15) in the direction causing an increase in the distance of the cutting edge (8) from the axis of the reamer (59) being restricted in such a manner that said deflection of the pin (24) at the upper limit of the adjustment range of the reamer still lies within the elastic deflection range of the pin (24).

2. A reamer according to claim 1, characterized in that the turnable cutting plate (3) has essentially the form of an equilateral triangle and that the two stops (14, 15) rest against the two triangle-sides (44, 45) of the turnable cutting plate (3) carrying the spare cutting edges (9, 10).

3. A reamer according to claim 1, characterized in that the turnable cutting plate (72) has essentially the form of a square and that the adjustable stop (78) rests against the square-side of the turnable cutting plate being parallel to the cutting edge (85) and that the fixed stop (77) rests against one of the two square-sides of the turnable cutting plate being perpendicular to the cutting edge (85).

4. A reamer according to claim 1, characterized in that the turnable cutting plate (73) has essentially the form of an equilateral pentagon and that the two stops (77, 78) rest against the two pentagon-sides of the turnable cutting plate meeting at the corner of the pentagon being diagonally opposite the cutting edge (85).

5. A reamer according to claim 1, characterized in that the turnable cutting plate (74) has essentially the form of an equilateral hexagon and that the two stops (77, 78) rest against the two hexagon-sides of the turnable cutting plate bordering on the two ends of the hexagon-side of the turnable cutting plate being parallel to the cutting edge (85).

6. A reamer according to claim 1, characterized in that the turnable cutting plate (75) has essentially the form of an equilateral octagon and that the two stops (77, 78) rest against the two octagon-sides of the turnable cutting plate bordering on the two ends of the octagon-side of the turnable cutting plate being parallel to the cutting edge (85).

7. A reamer according to one of the claims 1 through 6, characterized in that both the cutting edge (8; 85) and the sparei cutting edges (9, 10) lie on the plate-side of the turnable cutting plate facing away from the supporting surface.

8. A reamer according to one of the claims 1 through 7, characterized in that the opening (6) in the turnable cutting plate (3) is conical in its widening part (5) and cylindrical in the remaining part or parts (4) and that the axes (46) of the conical and cylindrical parts of the opening coincide and extend through the said center (7) of the turnable cutting plate and that the planes of the two plate-sides of the turnable cutting plate intersect perpendicularly and that said pressure part (19) possesses a conical form of at least approximately the same conicity as that of the the widening part (5) of the opening (6) or a spherical form matching the conical part of said opening.

9. A reamer according to one of the claims 1 through 8, characterized in that the said first (44) polygon-side and hence also the fixed stop (14; 77) resting against said first polygon-side lies closer to the head end (71) of the reamer head (2) than the said second (45) polygon-side and the adjustable stop (15) resting against said second polygon-side.

10. A reamer according to claim 1, characterized in that the turnable cutting plate (76) has essentially a rhombic form and that both the cutting edge (85) and the spare cutting edge provided on the rhombus-side of the turnable cutting plate being parallel to the cutting edge lie on the plate-side of the turnable cutting plate (76) facing away from the supporting surface and the other two spare cutting edges of the turnable cutting plate lie on the plate-side of the turnable cutting plate (76) facing toward the supporting surface, and that furthermore the opening in the turnable cutting plate comprises, in addition to said part widening toward the plate-side of the turnable cutting plate facing away from the supporting surface, a further part widening toward the plate-side of the turnable cutting plate facing toward the supporting surface, and that the adjustable stop (78) rests against the rhombus-side of the turnable cutting plate (76) being parallel to the cutting edge (85) and that the fixed stop (77) rests against one of the two other rhombus-sides of the turnable cutting plate (76) carrying spare cutting edges, preferably against that rhombus-side lying closer to the head end of the reamer head.

11. A reamer according to claim 10, characterized in that the opening in the turnable cutting plate (76) is conical in both ist widening parts and that the conicity of said two widening parts is identical and that the axes of said two widening parts coincide and extend through the said center of the turnable cutting plate and intersect the planes of the two plate-sides of the turnable cutting plate (76) perpendicularly and that the indicated pressure part has a conical form of at least approximately the same conicity as that of the two widening parts of the opening or a spherical form matching said two conical parts of the opening.

12. A reamer according to one of the claims 1 through 11, characterized in that the pressure part (19) and the pin (24) are formed by a screw (17; 86), at the head (18) of which the pressure part is provided and the shank (20) of which forms the pin, and that the borehole is a threaded borehole (25) into which the screw (17; 86) is screwed.

13. A reamer according to claim 12, characterized in that the threaded part (21) of the pin formed by the shank (20) of the screw is so dimensioned and arranged on the shank of the screw such that said threaded part (21) of the screw (17) is, with the screw connection tightened, completely accommodated within the threaded borehole (25).

14. A reamer according to claim 13, characterized in that the remaining, non-threaded part (23) of the screw shank (20) has, over at least a part of the total length of said remaining part adjoining the thread (22), a diameter being smaller than or at the most equal to the external diameter of the thread (22) reduced by twice the depth of the thread (22).

15. A reamer according to one of the claims 1 through 11, characterized in that the pin is anchored in the borehole, preferably by means of a press- or taper-fit, and projects out of said borehole and is provided with the thread over a section of said part of the pin projecting out of the borehole, the distance between said section of said part of the pin projecting out of the borehole and the plane of the supporting surface being greater than the plate-thickness of the turnable cutting plate, said pin being, in the region between the supporting surface and said section provided with the thread, cylindrical and having a diameter being greater than or at least equal to the external diameter of the thread, and that the pressure part is arranged at that side of a nut screwable onto the thread of the pin being turned toward the supporting surface and that a cylindrical borehole is provided within the pressure part, said borehole having the same diameter as that of the pin in the region between the supporting surface and the thread of the pin, the axis of said borehole coinciding with the axis of the threaded bore provided inside the nut.

16. A reamer according to one of the claims 1 through 15, characterized in that the means for the adjusting and compression-proof supporting of the adjustable stop (15; 78) comprise a pressure piece (37; 80, 81) supported at at least one guide surface (38, 39; 82, 83, 84) and arranged movably along the guide surface in a direction being parallel to the plane of the supporting surface (13) and being inclined toward the said second (45) polygon-side of the turnable cutting plate as well as in the opposite direction and resting on one side with a stop surface (35) forming the adjustable stop (15; 78) against the said second (45) polygon-side of the turnable cutting plate (3; 72, 73, 74, 75, 76) and on the other side with a contact surface (34) against a set screw (28; 79), and further comprise the set screw (28; 79) resting on one side on the pressure piece and on the other side on the said support element (27) and a threaded borehole (32) provided for the set screw in a part (33) of the reamer head (2) connected in one piece with the supporting surface (13), and in that said set screw comprises a cylindrical part (29) resting against said support element, a conical part (30), coaxial with the cylindrical part, resting against the contact surface of the pressure piece, and a threaded neck (31), likewise coaxial with the cylindrical part, fitting into the threaded borehole provided for the set screw, the set screw (28; 79) as well as the contact surface (34) of the pressure piece (37; 80, 81) resting against the conical part of said set screw being arranged and designed in such a manner that the pressure piece is moved along the guide surface by rotation of said set screw.

17. A reamer according to claim 16, characterized in that the set screw (28; 79) and the turnable cutting plate (3; 72, 73, 74, 75, 76) press the pressure piece (37; 80, 81) against a base (36) on which the pressure piece is movably arranged, and that preferably means (40, 41) are provided to hold the pressure piece on the base during changing of a cutting edge on the turnable cutting plate and during changing of the turnable cutting plate itself, said holding means being preferably a springy pin (41) fitted at the pressure piece and engaging in a sloping hole (40) in the base (36).

18. A reamer according to the claims 1 through 17, characterized in that the cutting edge (8; 85) and the spare cutting edges each comprise a main cutting section (11) in the region of the front end of the cutting edge and a secondary cutting section (12) bordering on said main cutting section and extending to the rear end of the cutting edge.

19. A reamer according to claim 18, characterized in that the secondary cutting sections of the turnable cutting plate (3; 72, 73, 74, 75, 76) extend parallel to the polygon-sides of the turnable cutting plate and in that the fixed stop (14; 77) fixes the position of the turnable cutting plate being pressed against said fixed stop in such a manner that the part of the cutting edge (8; 85) forming said secondary cutting section is inclined toward the axis (59) of the reamer and that the distance between the axis of the reamer and the cutting edge is greater at the front end of the part of the cutting edge forming said secondary cutting section lying at the point of transition (66) from the main cutting section to said secondary cutting section than at the rear end of the part of the cutting edge forming said secondary cutting section lying at the rear end (67) of the cutting edge.

20. A reamer according to one of the claims 1 through 19, characterized in that both the stops (14, 15; 77, 78) and all other parts of the reamer in contact with the turnable cutting plate (3; 72, 73, 74, 75, 76) are designed, preferably by means of recesses, in such a manner that the cutting edge and the spare cutting edges do not come into contact with any other parts of the reamer.

21. A reamer according to one of the claims 1 through 20, characterized in that the fixed stop (14; 77) extends over a major part of the total length of said first (44) polygon-side of the turnable cutting plate (3; 72, 73, 74, 75, 76), preferably over more than 80% of the total length of said side.

22. A reamer according to one of the claims 1 through 21, characterized in that the offset of the borehole (25) in the part (26) carrying the supporting surface of the reamer head against the opening (6) in the turnable cutting plate (3; 72, 73, 74, 75, 76) is dimensioned in such a manner that in the middle of the adjusting range of the reamer the said springy force (16) generated by the deflection of the pin acts at least approximately toward the point at which the said first (44) and said second (45) polygon-sides of the turnable cutting plate or extensions thereof intersect.

23. A reamer according to one of the claims 1 through 22, characterized in that the range provided for readjusting the reamer is smaller than the adjusting range of the reamer and lies within the median part of this adjustment range.

## Revendications

1. Alésoir réglable pour machines, comportant une tige d'outil (1), une tête d'alésoir (2) présentant un unique taillant (8, 85), une plaque de coupe (3, 72–76) tournante potant le taillant (8, 85), des moyens de fixation (17) pour l'appliquer sur une surface d'appui (13), des moyens de positionnement (15, 28, 36–39, 79–84) permettant un réglage variable de la distance du taillant (8, 85) à l'axe (59) de l'alésoir et plusieurs baguettes de guidage (42, 43) le long de la tête d'alésoir (2) pour le guidage du taillant (8, 85) sur un chemin circulaire et pour la reprise des efforts de coupe se produisant d'un seul côté, caractérisé en ce que la plaque de coupe (3, 72–76) tournante présente essentiellement la forme d'un polygone comportant le taillant (8, 85) sur un côté du polygone et des taillants de rechange (9, 10) sur les autres côtés et en ce que les moyens de fixation comprennent, dans la partie (26) portant la surface d'appui (13), une butée (14, 77) fixe pour un premier (44) des côtés du polygone de la plaque de coupe tournante, qui portent les taillants de rechange, une butée réglable (15, 78) pour un deuxième (45), incliné par rapport au premier, des côtés du polygone de la plaque de coupe tournante, qui portent les taillants de rechange, et une liaison par vis pour appliquer la plaque de coupe tournante sur la surface d'appui (13) et sur les deux butées (14, 15) avec un perçage (6) dans la plaque de coupe (3, 72–76) tournante, s'évasant, au moins sur une partie de sa longueur totale, vers le côté de la plaque de coupe (3, 72–76) tournante tourné vers la surface d'appui (13), au centre (7) de la plaque situé au point de rencontre des bissectrices des angles intérieurs du polygone, avec une pièce de pression (19), ajustée dans la partie s'évasant (5) du perçage, pouvant se déplacer vers l'intérieur de cette partie s'évasant (5) sous l'effet du serrage de la liaison par vis et placée sur un côté contre la partie s'évasant (5) du perçage (6) lorsque cette liaison par vis est serrée, avec un goujon (24) prévu, au moins sur une partie de sa longueur, avec un filetage (22) et appliqué par une liaison résistant à la traction sur la pièce de pression (19) et sur la partie (26), portant la surface d'appui (13), de la tête d'alésoir (2), et avec un perçage (25) recevant, au moins en partie, le goujon, tandis que le perçage (25), dans le but d'appliquer, comme il est dit plus haut, la pièce de pression (19) sur la partie s'évasant (5) du perçage (6), lorsque la liaison par vis est serrée, est disposé, décalé contre le perçage (6), de telle façon que la distance entre le taillant (8, 85) et le point de rencontre du prolongement de l'axe du perçage (25) avec le plan du côté de la plaque de coupe (3, 72–76) tournante tourné vers la surface d'appui (13), est plus grande que la distance entre le taillant (8, 85) et le point de rencontre du prolongement de l'axe du goujon (24) avec le pin du côté de la plaque de coupe (3, 72–76) tournante tourné vers la surface d'appui (13), et que la flexion, qui en résulte, du goujon (24) produit un effet de ressort (16; 87) qui applique le premier (44), déjà cité, des côtés du polygone de la plaque de coupe tournante sur la butée fixe (14) et la deuxième côté (45), déjà cité, du polygone de la plaque de coupe (3, 72–76) tournante sur la butée réglable (15), au moins au dessus de la limite inférieure de la plage de positionnement de l'alésoir, et ainsi exerce sur la butée réglable (15) une force de rappel à l'intérieur de la plage de positionnement de l'alésoir, et en ce que les moyens de positionnement comprennent la butée réglable (15) et des moyens de positionnement (28, 36–39, 79–84) permettant le réglage de celle-ci dans une direction essentiellement parallèle au plan de la surface d'appui (13) et inclinée par rapport au deuxième côté, déjà cité, du polygone de la plaque de coupe (3, 72–76) tournante et la direction opposée, et assurant un appui, essentiellement résistant à la pression, de la butée réglable sur au moins un organe d'appui (27) relié, en formant une seule pièce, avec la partie (26) portant la surface d'appui (13), tandis que la possibilité de réglage de la butée réglable (15) est limitée, dans la direction déterminant une augmentation de la distance du taillant (8) à l'axe (59) de l'alésoir, d'une façon telle que la flexion, citée ci-dessus, du goujon (24) se trouve, à la limite supérieure de la plage de positionnement de l'alésoir, encore dans le domaine de flexion élastique du goujon (24).

2. Alésoir suivant la revendication 1, caractérisé en ce que la plaque de coupe (3) tournante a essentiellement la forme d'un triangle équilatéral et en ce que les deux butées (14, 15) se trouvent en contact avec les deux côtés (44, 45) du triangle portant les taillants de rechange (9, 10).

3. Alésoir suivant la revendication 1, caractérisé en ce que la plaque de coupe (72) tournante a essentiellement la forme d'un carré et en ce que la butée réglable (78) se trouve en contact avec le côté du carré de la plaque de coupe tournante parallèle au taillant (85) et en ce que la butée fixe (77) se trouve en contact avec l'un des deux côtés du carré de la plaque de coupe tournante perpendiculaires au taillant (85).

4. Alésoir suivant la revendication 1, caractérisé en ce que la plaque de coupe (3, 72–76) tournante a essentiellement la forme d'un pentagone régulier et en ce que les deux butée (77, 78) se trouvent en contact avec les deux côtés du pentagone de la plaque de coupe tournante qui concourrent au sommet du pentagone opposé diagonalement au taillant (85).

5. Alésoir suivant la revendication 1, caractérisé en ce que la plaque de coupe (3, 72–76) tournante a essentiellement la forme d'un hexagone régulier et en ce que les deux butée (77, 78) se trouvent en contact avec les deux côtés de l'hexagone de la plaque de coupe tournante situés de part et d'autre du côté de l'hexagone parallèle au taillant (85).

6. Alésoir suivant la revendication 1, caractérisé en ce que la plaque de coupe (3, 72–76) tournante a essentiellement la forme d'un octogone régulier et en ce que les deux butée (77, 78) se trouvent en contact avec les deux côtés (44, 45) de l'octogone de la plaque de coupe tournante situés de part et d'autre du côté de l'octogone parallèle au taillant (85).

7. Alésoir suivant l'une quelconque des revendications 1 à 6, caractérisé en ce qu'aussi bien le taillant (8, 85) que les taillants de rechange (9, 10) se trouvent sur le côté de la plaque de coupe tournante tourné vers la surface d'appui.

8. Alésoir suivant l'une quelconque des revendications 1 à 7, caractérisé en ce que le perçage (6) dans la plaque de coupe (3) tournante est conique dans sa partie s'évasant (5) et cylindrique dans sa ou ses autres parties (4) et en ce que les axes (46) des parties coniques et cylindriques du perçage sont confondus et passent par le centre, déjà cité, de la plaque et recoupent perpendiculairement les plans des deux faces de la plaque de coupe tournante et en ce que la pièce de pression (19) déjà citée a une forme conique, d'une conicité sensiblement au moins égale à celle de la partie s'évasant (5) du perçage (6) ou a une forme bombée s'adaptant sur la partie conique du perçage.

9. Alésoir suivant l'une quelconque des revendications 1 à 8, caractérisé en ce que le premier côté (44) déjà cité du polygone et, avec lui, la butée fixe (14; 77) placée contre lui se trouve plus près de l'extrémité (71) de la tête de l'alésoir (2) que du deuxième côté (45), déjà cité, du polygone et de la butée réglable (15) située contre lui.

10. Alésoir suivant la revendication 1, caractérisé en ce que la plaque de coupe (3, 72–76) tournante a essentiellement la forme d'un losange et en ce que le taillant (85) ainsi que le taillant de rechange prévu sur le côté du losange de la plaque de coupe tournante parallèle au taillant (8) se trouvent sur le côté de la plaque de coupe tournante (76) tourné vers la surface d'appui et les deux autres taillants de rechange de la plaque de coupe tournante se trouvent sur le côte de la plaque de coupe tournante (76) tourné vers la surface d'appui, en ce que, de plus, le perçage dans la plaque de coupe tournante présente, à côté de la partie, déjà citée, s'évasant vers le côté, tourné vers la surface d'appui, de la plaque de coupe tournante, une autre partie s'évasant vers le côté, tourné vers la surface d'appui, de la plaque de coupe tournante, et en ce que la butée réglable (78) se trouve en contact avec le côté du losange de la plaque de coupe tournante parallèle au taillant (85) et en ce que la butée fixe (77) se trouve en contact avec l'un des deux autres côtés du losange de la plaque de coupe tournante (76) portant des taillants de rechange, ou, avantageusement contre le côté du losange le plus proche de l'extrémité de la tête de l'alésoir.

11. Alésoir suivant la revendication 10, caractérisé en ce que le perçage dans la plaque de coupe tournante (76) est conique dans ses deux parties s'évasant et en ce que la conicité de ces deux parties s'évasant est égale et en ce que les axes de ces deux parties s'évasant sont confondus et passent par le centre de la plaque déjà cité et les plans des deux côtés de la plaque de coupe (76) tournante se recoupent perpendiculairement et en ce que la pièce de pression a une forme conique, d'une conicité égale, ou au moins approchante, de celle des deux parties s'évasant du perçage, ou bien a une forme bombée s'adaptant sur ces deux parties coniques du perçage.

12. Alésoir suivant l'une quelconque des revendications 1 à 11, caractérisé en ce que la pièce de pression (19) et le goujon (24) sont constitués par une vis (17; 86) sur la tête (18) de laquelle vis est prévue la pièce de pression et dont la tige de vis (20) constitue le goujon et en ce que le perçage est un perçage fileté (25) dans lequel la vis (17) est vissée.

13. Alésoir suivant la revendication 12, caractérisé en ce que la partie prévue avec le filetage (22) du goujon formé par la tige de vis (20) est mesuré, et disposé sur la tige de vis, de façon telle qu'après serrage de la vis, cette partie filetée (21) de la vis (17) se trouve totalement à l'intérieur du perçage fileté (25).

14. Alésoir suivant la revendication 13, caractérisé en ce que le reste de la partie (23), non prévue avec un filetage, de la tige de vis (20) a, au moins sur une partie contiguë au filetage (22), un diamètre plus petit, ou au plus égal au diamètre extérieur du filetage (22), réduit du double de la profondeur du filetage (22).

15. Alésoir suivant l'une quelconque des revendications 1 à 11, caractérisé en ce que le goujon est ancré dans le perçage, avantageusement par ajustage serré ou conique, et dépasse hors de celui-ci et est prévu avec le filetage sur un segment de cette partie du goujon dépassant hors du perçage, segment dont la distance au plan de la surface d'appui est plus grande que l'épaisseur de la plaque de coupe tournante, et est cylindrique dans la zone située entre la surface d'appui et ce segment prévu avec le filetage, et a un diamètre plus grand ou, au moins, égal au diamètre extérieur du filetage, et en ce que la pièce de pression est disposée sur la face, tournée vers la surface d'appui, d'un écrou, que l'on peut visser sur le filetage du goujon, et en ce que, à l'intérieur de la pièce de pression, est prévu un perçage cylindrique du même diamètre que celui du goujon dans la zone comprise entre la surface d'appui et le filetage, perçage dont l'axe coïncide avec celui du perçage fileté prévu dans l'écrou.

16. Alésoir suivant l'une quelconque des revendications 1 à 15, caractérisé en ce que les moyens de réglage et d'appui résistant à la pression de la butée réglable (15) comportent une pièce de pression (37; 80, 81) venant en butée avec, au moins, une surface-guide (38, 39; 82, 83, 84) et disposée de façon déplaçable, le long de la surface-guide, dans une direction parallèle au plan de la surface d'appui (13) et inclinée par rapport au le deuxième côté (45), déjà cité, du polygone de la plaque de coupe tournante ainsi que dans une direction opposée, cette pièce de pression étant en contact, d'un côté par une surface de butée (35) formant la butée réglable (15), avec le deuxième côté (45), déjà cité, du polygone de la plaque de coupe (3; 72, 73, 74, 75, 76) tournante et, de l'autre côté, par une surface de contact (34), avec une vis de positionnement (28; 70), et comportent la vis de positionnement (28; 79) placée en contact, d'un côté, avec la pièce de pression et, de l'autre, avec l'organe d'appui (27) déjà cité, ainsi qu'un perçage fileté (32) prévu pour la vis de positionnement dans une partie (33) de la tête de l'alésoir (2) formant une seule pièce avec la surface d'appui (13), et en ce que la vis de positionnement comporte une partie cylindrique (29) placée en contact avec l'organe d'appui, une partie conique (30) située en contact avec la surface de contact de la pièce de pression, et un tourillon fileté (31), coaxial, de même, avec la partie cylindrique, et adapté au perçage fileté prévu pour la vis de positionnement, tandis que la vis de positionnement (28; 79) et la surface de contact (34) de la pièce de pression (37; 80, 81) ont une disposition et une forme telles qu'en tournant la vis de positionnement, on déplace la pièce de pression le long de la surface-guide.

17. Alésoir suivant la revendication 16, caractérisé en ce que la vis de positionnement (28; 79) et la plaque de coupe (3, 72, 73, 74, 75, 76) tournante applique la pièce de pression (37; 80, 81) sur un support (36) sur lequel peut être déplacée la pièce de pression, tandis que des moyens de fixation (40, 41) sont avantageusement prévus pour maintenir la pièce de pression sur le support lors d'un changement de taillant de la plaque de coupe tournante ou un remplacement de cette dernière.

18. Alésoir suivant l'une quelconque des revendications 1 à 17, caractérisé en ce que le taillant (8, 85) et les taillants de rechange comportent chacun un taillant principal (11) dans la zone de leur extrémité avant et un taillant auxiliaire (12) contigu à celle-ci et s'étendant jusqu'à l'extrémité arrière.

19. Alésoir suivant la revendication 18, caractérisé en ce que les taillants auxiliaires de la plaque de coupe (3, 72, 73, 74, 75, 76) tournante sont disposés parallèlement aux côtés du polygone de cette dernière et la butée fixe (14; 77) détermine la position de la plaque de coupe tournante appliquée contre elle de façon telle que la partie du taillant (8, 85), formant le taillant auxiliaire, est inclinée vers l'axe (59) de l'alésoir et que la distance entre l'axe de l'alésoir et le taillant, à l'extrémité avant, se trouvant au point de transition (66) du taillant principal au taillant auxiliaire, de la partie de taillant formant taillant auxiliaire, est plus grande qu'à l'extrémité arrière, se trouvant à l'extrémité arrière (67), de la partie de taillant formant taillant auxiliaire.

20. Alésoir suivant l'une quelconque des revendications 1 à 19, caractérisé en ce que les deux butées (14, 15; 77, 78) et toutes les autres parties de l'alésoir se trouvant en contact avec la plaque de coupe (3, 72, 73, 74, 75, 76) tournante, avantageusement au moyen de cannelures, ont une configuration telle que le taillant et le taillant de rechange ne viennent en contact avec aucune autre partie de l'alésoir.

21. Alésoir suivant l'une quelconque des revendications 1 à 20, caractérisé en ce que la butée fixe (14; 77) s'étend sur une partie prépondérante de la longueur totale du premier côté (44), déjà cité, du polygone de la plaque de coupe (3, 72, 73, 74, 75, 76) tournante, avantageusement sur plus de 80% de la longueur totale de celui-ci.

22. Alésoir suivant l'une quelconque des revendications 1 à 21, caractérisé en ce que le décalage du perçage (25) dans la partie (26), portant la surface d'appui (13), de la tête de l'alésoir, par rapport au perçage (6) dans la plaque de coupe (3, 72, 73, 74, 75, 76) tournante est dimensionné de façon telle que la force due à l'effet de ressort (16), déjà cité, produit par la flexion du goujon (24), passe, au milieu de la plage de positionnement de l'alésoir, au moins d'une façon approchée, par le point de rencontre du premier côté (44), déjà cité, et du deuxième côté (45), déjà cité, du polygone de la plaque de coupe tournante ou des prolongements de ceux-ci.

23. Alésoir suivant l'une quelconque des revendications 1 à 22, caractérisé en ce que la plage prévue pour le réglage de l'alésoir est plus petite que la plage de positionnement de l'alésoir et se trouve dans la partie médiane de cette plage de positionnement.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13